(19) Europäisches Patentamt
European Patent Office
Office européen des brevets

(11) EP 4 589 409 A1

(12) **EUROPEAN PATENT APPLICATION**
published in accordance with Art. 153(4) EPC

(43) Date of publication:
**23.07.2025 Bulletin 2025/30**

(21) Application number: **23864697.0**

(22) Date of filing: **12.09.2023**

(51) International Patent Classification (IPC):
***G06F 3/01*** *(2006.01)* ***G06T 19/00*** *(2011.01)*

(52) Cooperative Patent Classification (CPC):
**G06F 3/01; G06T 19/00**

(86) International application number:
**PCT/CN2023/118297**

(87) International publication number:
**WO 2024/055965 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.09.2022 CN 202211129263**
**20.09.2022 CN 202211146361**

(71) Applicant: **Beijing Zitiao Network Technology Co., Ltd.**
**Beijing 100190 (CN)**

(72) Inventor: **XUE, Mingchen**
**Beijing 100028 (CN)**

(74) Representative: **Dentons UK and Middle East LLP**
**One Fleet Place**
**London EC4M 7WS (GB)**

(54) **IMAGE DISPLAY METHOD, MIRROR IMAGE DISPLAY METHOD IN EXTENDED REALITY SPACE, APPARATUSES, ELECTRONIC DEVICES, AND MEDIUM**

(57) The present disclosure relates to an image display method and apparatus, and an electronic device, and particularly to the field of virtual reality technologies. The method includes: determining a first orientation of a mirror camera; determining a first position of the mirror camera based on a position of a first-person perspective camera, a preset distance, and the first orientation; and obtaining a first image based on the first position and the first orientation, and displaying the first image on a virtual mirror. The present disclosure provides a mirror image display method and apparatus in an extended reality space, and an electronic device and a medium, and relates to the field of mirror image display technologies. The method includes: receiving a mirror image display adjustment instruction triggered by a user for a target object, where the mirror image display adjustment instruction is configured to instruct to adjust a display proportion of the target object in a virtual display; adjusting parameter information of a virtual camera based on the mirror image display adjustment instruction; and displaying the target object in the virtual display based on a display image obtained by the virtual camera after the parameter information is adjusted.

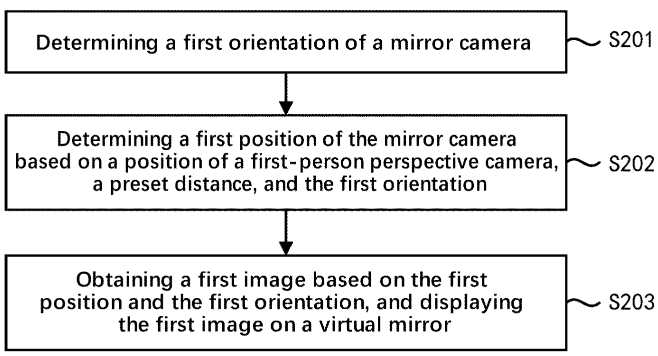


FIG. 2

EP 4 589 409 A1

## Description

CROSS-REFERENCE TO RELATED APPLICATION(S)

The present application is based on and claims priority to Chinese Patent Application No. 202211129263.3, filed on September 16, 2022, and Chinese Patent Application No. 202211146361.8, filed on September 20, 2022. The disclosure of the Chinese patent applications are incorporated herein by reference in their entireties.

TECHNICAL FIELD

The present disclosure relates to the field of virtual reality technologies and mirror image display technologies, and in particular, to an image display method and apparatus, an electronic device, a mirror image display method and apparatus in an extended reality space, an electronic device, and a medium.

BACKGROUND

Extended reality refers to a computer-based combination of a real scene and virtual content to create an extended reality environment for human-computer interaction. In an extended reality scene, a user can customize and set a network virtual character image and various parameters of the user, and can view an image preview in a third-person perspective provided for the user.

In the related art, the user has poor viewing effect on the virtual character image in the extended reality, resulting in that an expected effect cannot be achieved when adjusting the virtual character image in the extended reality scene.

In virtual reality, a user may create a three-dimensional avatar, especially a three-dimensional avatar highly similar to a self-image, to represent the user, for a better experience. In the process of creating or modifying the avatar, it is difficult to provide a reference for the creation or modification of the avatar, affecting the user experience.

SUMMARY

To solve the above technical problems or at least partially solve the above technical problems, the present disclosure provides an image display method and apparatus and an electronic device, to implement movement of a mirror camera following an avatar and always present the avatar in a virtual mirror. Embodiments of the present disclosure further provide a mirror image display method and apparatus in an extended reality space, an electronic device, and a medium, to solve the problem of poor viewing effect of the user on the virtual character image in the extended reality scene.

To achieve the above objective, technical solutions provided in the embodiments of the present disclosure are as follows:

In a first aspect, the present disclosure provides an image display method, wherein the method includes:

determining a first orientation of a mirror camera;
determining a first position of the mirror camera based on a position of a first-person perspective camera, a preset distance, and the first orientation; and
obtaining a first image based on the first position and the first orientation, and displaying the first image on a virtual mirror.

In some embodiments, the method further includes: in response to an adjustment instruction for the mirror camera, determining a second orientation of the mirror camera; determining a second position of the mirror camera based on the position of the first-person perspective camera, the preset distance, and the second orientation; obtaining a second image based on the second orientation and the second position, and updating and displaying the second image on the virtual mirror.

In some embodiments, the first orientation is determined based on a perpendicular direction from an initial position of the first-person perspective camera to a mirror surface of the virtual mirror.

In some embodiments, a length of a projection, on the ground, of a connection line between the first-person perspective camera and the mirror camera is the preset distance.

In some embodiments, the position of the first-person perspective camera includes a height of the first-person perspective camera, and the position of the mirror camera includes a height of the mirror camera; and the height of the mirror camera is determined based on the height of the first-person perspective camera and/or a height of the virtual mirror.

In some embodiments, a manner of determining the height of the mirror camera includes: determining a reference offset height of the mirror camera in a height direction based on the preset distance, the height of the virtual mirror, and a field of view of the mirror camera; determining an offset ratio, where the offset ratio is a ratio of an offset height to a mirror half-height of the virtual mirror, and the offset height is a height of the first-person perspective camera relative to a mirror midpoint of the virtual mirror; determining an offset height of the mirror camera based on the reference offset height and the offset ratio; and determining the height of the mirror camera based on the offset height of the mirror camera and the height of the mirror midpoint.

In some embodiments, the first-person perspective camera, the virtual mirror, and the mirror camera are located in a same virtual space, and the virtual mirror is vertically arranged on the ground.

In some embodiments, the method is applied to

a VR head-mounted display device.

In a second aspect, the present disclosure provides an image display apparatus, where the apparatus includes:

a processing module, configured to determine a first orientation of a mirror camera, and determine a first position of the mirror camera based on a position of a first-person perspective camera, a preset distance, and the first orientation; and
a display module, configured to obtain a first image based on the first position and the first orientation, and display the first image on a virtual mirror.

In some embodiments, the processing module is further configured to: in response to an adjustment instruction for the mirror camera, determine a second orientation of the mirror camera, and determine a second position of the mirror camera based on the position of the first-person perspective camera, the preset distance, and the second orientation; and
the display module is further configured to obtain a second image based on the second orientation and the second position, and update and display the second image on the virtual mirror.

In some embodiments, the first orientation is determined based on a perpendicular direction from an initial position of the first-person perspective camera to a mirror surface of the virtual mirror.

In some embodiments, a length of a projection, on the ground, of a connection line between the first-person perspective camera and the mirror camera is the preset distance.

In some embodiments, the position of the first-person perspective camera includes a height of the first-person perspective camera, and the position of the mirror camera includes a height of the mirror camera; and the height of the mirror camera is determined based on the height of the first-person perspective camera and/or a height of the virtual mirror.

In some embodiments, the processing module is specifically configured to: determine a reference offset height of the mirror camera in a height direction based on the preset distance, the height of the virtual mirror, and a field of view of the mirror camera; determine an offset ratio, where the offset ratio is a ratio of an offset height to a mirror half-height of the virtual mirror, and the offset height is a height of the first-person perspective camera relative to a mirror midpoint of the virtual mirror; determine an offset height of the mirror camera based on the reference offset height and the offset ratio; and determine the height of the mirror camera based on the offset height of the mirror camera and the height of the mirror midpoint.

In some embodiments, the first-person perspective camera, the virtual mirror, and the mirror camera are located in a same virtual space, and the virtual mirror is vertically arranged on the ground.

In a third aspect, the present disclosure provides an electronic device, including: a processor, a memory, and a computer program stored on the memory and executable on the processor, where the computer program, when executed by the processor, causes the image display method according to the first aspect or any one of the optional implementations of the first aspect to be implemented.

In a fourth aspect, the present disclosure provides a computer-readable storage medium, including: a computer program stored on the computer-readable storage medium, where the computer program, when executed by a processor, causes the image display method according to the first aspect or any one of the optional implementations of the first aspect to be implemented.

In a fifth aspect, the present disclosure provides a computer program product, including: when the computer program product runs on a computer, causing the computer to implement the image display method according to the first aspect or any one of the optional implementations of the first aspect.

In a sixth aspect, the present disclosure provides a mirror image display method in an extended reality space, including:

receiving a mirror image display adjustment instruction triggered by a user for a target object, where the mirror image display adjustment instruction is configured to instruct to adjust a display proportion of the target object in a virtual display;
adjusting parameter information of a virtual camera based on the mirror image display adjustment instruction; and
displaying the target object in the virtual display based on a display image obtained by the virtual camera after the parameter information is adjusted.

In some embodiments, the parameter information includes a field of view; and
the adjusting parameter information of the virtual camera based on the mirror image display adjustment instruction includes:

reducing the field of view of the virtual camera based on the mirror image display adjustment instruction; or
increasing the field of view of the virtual camera based on the mirror image display adjustment instruction.

In some embodiments, the parameter information includes a field of view; and

the mirror image display adjustment instruction is specifically configured to instruct to adjust the display proportion of the target object in the virtual display to a target proportion; and
the adjusting parameter information of the virtual camera based on the mirror image display adjustment instruction includes:

obtaining a target adjustment parameter based on the target proportion, where the target adjustment parameter includes a target field of view; and
adjusting the virtual camera based on the target adjustment parameter.

In some embodiments, the obtaining the target adjustment parameter based on the target proportion includes: obtaining the target field of view of the virtual camera based on an initial field of view of the virtual camera and the target proportion.
In some embodiments, the target field of view is not within a preset field of view range; and the adjusting the virtual camera based on the target adjustment parameter includes:

obtaining a target distance between the virtual camera and the target object based on the initial field of view of the virtual camera, a preset field of view, an initial distance between the virtual camera and the target object, and the target proportion; and
adjusting the field of view of the virtual camera to the preset field of view, and adjusting the virtual camera to be at the target distance from the target object.

In some embodiments, the parameter information includes a distance between the virtual camera and the target object; and
the adjusting parameter information of the virtual camera based on the mirror image display adjustment instruction includes:

adjusting the distance between the virtual camera and the target object to be closer based on the mirror image display adjustment instruction; or
adjusting the distance between the virtual camera and the target object to be farther based on the mirror image display adjustment instruction.

In some embodiments, the method further includes:

determining a distance between a near clipping plane of the virtual camera and the target object as a preset distance; or
determining a distance between a near clipping plane of the virtual camera and the target object as a distance between the target object and the virtual display.

In a seventh aspect, the present disclosure provides a mirror image display apparatus in an extended reality space, including:

an adjustment instruction receiving module, configured to receive a mirror image display adjustment instruction triggered by a user for a target object , where the mirror image display adjustment instruction is configured to instruct to adjust a display proportion of the target object in a virtual display;
a parameter information adjustment module, configured to adjust parameter information of a virtual camera based on the mirror image display adjustment instruction; and
a target object display module, configured to display the target object in the virtual display based on a display image obtained by the virtual camera after the parameter information is adjusted.

In some embodiments, the parameter information includes a field of view; and

the parameter information adjustment module is specifically configured to reduce the field of view of the virtual camera based on the mirror image display adjustment instruction; or
increase the field of view of the virtual camera based on the mirror image display adjustment instruction.

In some embodiments, the parameter information includes a field of view; and

the mirror image display adjustment instruction is specifically configured to instruct to adjust the display proportion of the target object in the virtual display to a target proportion; and
the parameter information adjustment module is specifically configured to obtain a target adjustment parameter based on the target proportion, where the target adjustment parameter includes a target field of view; and
adjust the virtual camera based on the target adjustment parameter.

In some embodiments, the parameter information adjustment module is specifically configured to obtain the target field of view of the virtual camera based on an initial field of view of the virtual camera and the target proportion.
In some embodiments, the target field of view is not within a preset field of view range; and the parameter information adjustment module is specifically configured to obtain a target distance between the virtual camera and the target object based on the initial field of view of the virtual camera, a preset field of view, an initial distance between the virtual camera and the target object, and the target proportion; and adjust the field of view of the virtual camera to the preset field of view, and adjust the virtual camera to be at the target distance from the target object.
In some embodiments, the parameter information includes a distance between the virtual camera and the target object; and
the parameter information adjustment module is specifically configured to adjust the distance between the virtual camera and the target object to be closer based on the mirror image display adjustment instruction; or adjust the distance between the virtual camera and the target object to be farther based on the mirror image display adjustment instruction.

In some embodiments, the target object display module is further configured to determine a distance between a near clipping plane of the virtual camera and the target object as a preset distance; or determine a distance between a near clipping plane of the virtual camera and the target object as a distance between the target object and the virtual display.

In an eighth aspect, the present disclosure provides an electronic device, including: a memory and a processor, where the memory is configured to store a computer program; and the processor is configured to, when executing the computer program, cause the electronic device to implement the mirror image display method in the extended reality space according to any one of the items of the first aspect.

In a ninth aspect, the present disclosure provides a computer-readable storage medium, including: a computer program stored on the computer-readable storage medium, where when the computer program is executed by a computing device, the computing device is caused to implement the mirror image display method in the extended reality space according to any one of the items of the first aspect.

In a tenth aspect, an embodiment of the present disclosure provides a computer program product, where when a program included in the computer program product runs on a computer, the computer is caused to implement the mirror image display method in the extended reality space according to any one of the foregoing implementations.

In an eleventh aspect, an embodiment of the present disclosure provides a computer program, including: instructions that, when executed by a processor, cause the processor to execute the image display method and/or the mirror image display method in the extended reality space according to any one of the foregoing embodiments.

## BRIEF DESCRIPTION OF THE DRAWINGS

The accompanying drawings, which are incorporated into and constitute a part of this specification, illustrate embodiments consistent with the present disclosure and, together with the description, serve to explain the principles of the present disclosure.

In order to more clearly illustrate the technical solutions in the embodiments of the present disclosure or the related art, the accompanying drawings for describing the embodiments or the related art will be briefly described below. It is clear that a person of ordinary skill in the art may still derive other drawings from these accompanying drawings without creative efforts.

FIG. 1A is a schematic diagram of an implementation scenario of an image display method according to an embodiment of the present disclosure;

FIG. 1B is a schematic diagram of a picture presented in a display of a VR head-mounted display device according to an embodiment of the present disclosure;

FIG. 2 is a schematic flowchart of an image display method according to an embodiment of the present disclosure;

FIG. 3 is a schematic diagram of a first orientation of a mirror camera in an embodiment of the present disclosure;

FIG. 4 is a schematic diagram of an orientation of a mirror camera in an embodiment of the present disclosure;

FIG. 5A is a schematic diagram of a preset distance in an embodiment of the present disclosure;

FIG. 5B is a schematic diagram of a height of a mirror camera in an embodiment of the present disclosure;

FIG. 6 is a schematic diagram of determining a reference offset height of a mirror camera according to an embodiment of the present disclosure;

FIG. 7 is a schematic diagram of determining a height of a mirror camera according to an embodiment of the present disclosure;

FIG. 8 is a schematic diagram of determining a first position of a mirror camera according to an embodiment of the present disclosure;

FIG. 9 is a schematic diagram of a structure of an image display apparatus according to an embodiment of the present disclosure;

FIG. 10 is a schematic diagram of a structure of an electronic device according to an embodiment of the present disclosure.

FIG. 11a is a schematic diagram of an application scenario of a mirror image display method in an extended reality space according to an embodiment of the present disclosure;

FIG. 11b is a schematic diagram of a picture presented in a display of a head-mounted display device according to an embodiment of the present disclosure;

FIG. 12 is a flowchart of steps of a mirror image display method in an extended reality space according to an embodiment of the present disclosure;

FIG. 13a is a first display diagram of an interface of a mirror image display method in an extended reality space according to an embodiment of the present disclosure;

FIG. 13b is a second display diagram of an interface of a mirror image display method in an extended reality space according to an embodiment of the present disclosure;

FIG. 13c is a third display diagram of an interface of a mirror image display method in an extended reality space according to an embodiment of the present disclosure;

FIG. 13d is a fourth display diagram of an interface of a mirror image display method in an extended reality space according to an embodiment of the present disclosure;

FIG. 14a is a first display diagram of a shooting range of a virtual camera based on adjusting a field of view according to an embodiment of the present disclosure;

FIG. 14b is a second display diagram of a shooting range of a virtual camera based on adjusting a field of view according to an embodiment of the present disclosure;

FIG. 14c is a third display diagram of a shooting range of a virtual camera based on adjusting a field of view according to an embodiment of the present disclosure;

FIG. 14d is a first display diagram of a shooting range of a virtual camera based on adjusting a shooting position according to an embodiment of the present disclosure;

FIG. 14e is a second display diagram of a shooting range of a virtual camera based on adjusting a shooting position according to an embodiment of the present disclosure;

FIG. 14f is a third display diagram of a shooting range of a virtual camera based on adjusting a shooting position according to an embodiment of the present disclosure;

FIG. 15 is a schematic diagram of a structure of a mirror image display apparatus in an extended reality space according to an embodiment of the present disclosure;

FIG. 16 is a schematic diagram of a hardware structure of an electronic device according to an embodiment of the present disclosure.

## DETAILED DESCRIPTION OF EMBODIMENTS

In order to more clearly understand the above objectives, features, and advantages of the present disclosure, the solutions of the present disclosure are further described below. It should be noted that, without conflict, embodiments of the present disclosure and features in the embodiments may be combined with each other.

In the following description, many specific details are set forth to facilitate a full understanding of the present disclosure. However, the present disclosure may also be implemented in other manners than those described herein. Apparently, the embodiments described in the specification are merely some rather than all of the embodiments of the present disclosure.

In the embodiments of the present disclosure, the words such as "exemplary" or "for example" are used to represent serving as an example, illustration, or description. Any embodiment or design solution described as "exemplary" or "for example" in the embodiments of the present disclosure shall not be construed as being more preferred or more advantageous than another embodiment or design solution. Rather, the use of the word such as "exemplary" or "for example" is intended to present the related concept in a specific manner. In addition, in the description of the embodiments of the present disclosure, unless otherwise specified, "a plurality of" means two or more than two.

To more clearly describe the technical solutions in the embodiments of the present disclosure or the related art, the following briefly describes technical terms required in the description of the embodiments or the related art: A virtual mirror is a display surface in virtual reality that undergoes image processing together with virtual reality to be presented to the user.

The mirror camera is used to determine an image acquisition parameter based on a position and an orientation of the mirror camera, to obtain an image.

In the process of creating or modifying an avatar, to enhance a sense of reality, a virtual mirror is displayed in front of the avatar to simulate changing clothes in front of a mirror in real life. The technical principle is to set up a mirror camera at a specific distance in front of the avatar, and then display, on the mirror, a picture of the avatar shot by the mirror camera. However, the mirror camera set in this manner is fixed, and after the position of the avatar changes, the mirror may not present a complete mirror image, thereby making it difficult to provide a reference for creating or modifying the avatar. In addition, visually, the picture in the mirror has no depth, which is different from a mirror in real life. Therefore, it is difficult to achieve a virtual reality effect, which makes the user uncomfortable and affects the user experience.

To solve the above problem, an embodiment of the present disclosure provides an image display method and apparatus and an electronic device. The image display method first determines a first orientation of a mirror camera, then determines a position of the mirror camera based on a position of a first-person perspective camera, a preset distance, and the first orientation, then obtains a first image based on the first position and the first orientation, and displays the first image on a virtual mirror. This implements movement of the mirror camera following the avatar, thereby always presenting an image of the avatar in the virtual mirror, providing a reference for creating or modifying the avatar, and improving the user experience.

As shown in FIG. 1A, FIG. 1A is a schematic diagram of an implementation scenario of an image display method according to an embodiment of the present disclosure. A user wears a VR head-mounted display device 101. In a virtual reality scene, the user operates a three-dimensional avatar by using a VR handheld device 102 (for example, a joystick). The user expects to modify the three-dimensional avatar. As shown in FIG. 1B, FIG. 1B is a schematic diagram of a picture presented in a display of a VR head-mounted display device according to an embodiment of the present disclosure. The picture includes a virtual mirror 11, a mirror camera 12, and an image selection panel 13. First, a first orientation of the mirror camera 12 is determined. Then, a position of the

mirror camera is determined based on a position of a first-person perspective camera, a preset distance, and the first orientation. Then, a first image is obtained based on the first position and the first orientation, and the first image is displayed on the virtual mirror.

It should be noted that both the first-person perspective camera and the mirror camera may be virtual objects that implement image acquisition in virtual reality, and do not necessarily exist in virtual reality or are displayed. They are introduced in the figures to facilitate description of an image acquisition position and orientation.

The image display method provided in this embodiment of the present disclosure may be implemented by an image display apparatus or an electronic device. A gesture interaction apparatus may be a functional module or a functional entity in the electronic device that is configured to implement the image display method. The electronic device may include but is not limited to a mobile phone, a computer, an AR device, or a VR device. For example, the AR device may include AR glasses, and the VR device may include a VR head-mounted display device.

As shown in FIG. 2, FIG. 2 is a schematic flowchart of an image display method according to an embodiment of the present disclosure. The method includes the following steps S201 to S204:

S201: Determine a first orientation of a mirror camera.

In a scenario in which the user expects to modify the avatar, the image selection panel and the virtual mirror are displayed simultaneously. To simulate that the user looks into a mirror in a real scene, the virtual mirror is displayed right in front of the avatar, that is, the virtual mirror is displayed right in front of the first-person perspective camera. Therefore, a direction of a perpendicular from an initial position of the first-person perspective camera to a mirror surface of the virtual mirror may be determined, and the first orientation of the mirror camera is opposite to the direction of the perpendicular from the initial position of the first-person perspective camera to the mirror surface of the virtual mirror. This is an initial orientation of the virtual mirror. As shown in FIG. 3, FIG. 3 is a schematic diagram of a first orientation of a mirror camera in an embodiment of the present disclosure. The figure shows a first-person perspective camera 10, a virtual mirror 11, and a mirror camera 12. A direction of a perpendicular from the first-person perspective camera 10 to the mirror surface of the virtual mirror is indicated by arrow 1, and in an initial state, the first orientation of the mirror camera is opposite to a direction indicated by arrow 1, which is a direction indicated by arrow 2.

In this embodiment of the present disclosure, with reference to FIG. 1B, a direction control is provided on the virtual mirror 11. In some embodiments, the first orientation of the mirror camera is determined based on a number of times and/or a duration for which the direction control is clicked by a user operation. The direction control includes a left control, a right control, an up control, and a down control. For example, when the user clicks the right control, it indicates that the user expects to view the avatar from a leftward angle. Based on a mirror image principle, the orientation of the mirror camera changes in a counterclockwise direction.

When the user clicks the direction control, an adjustment instruction for the mirror camera is generated, where the adjustment instruction is configured to instruct to adjust the orientation of the mirror camera from the first orientation to a second orientation. In response to the adjustment instruction, the second orientation of the mirror camera is determined. As shown in FIG. 4, FIG. 4 is a schematic diagram of an orientation of a mirror camera in an embodiment of the present disclosure. Taking a top view of a virtual space as an example, the figure shows a first orientation A of a mirror camera 12. If a position of a first-person perspective camera 10 does not change, when the user clicks the right control, an adjustment instruction for controlling the orientation of the mirror camera 12 to change in the counterclockwise direction is generated. In response to the adjustment instruction for the mirror camera 12, a second orientation of the mirror camera 12 always points to the first-person perspective camera 10. Three second orientations B, C, and D of the mirror camera are exemplarily shown in the figure.

S202: Determine a first position of the mirror camera based on a position of a first-person perspective camera, a preset distance, and the first orientation.

The first-person perspective camera is equivalent to a camera set at the position of the eyes of the avatar, so that the user can observe the virtual space through the first-person perspective camera during virtual display while wearing the VR head-mounted display device, to simulate a human eye field of view in real life, thereby fitting reality (the position and/or orientation of the first-person perspective camera is the same as or related to the position and/or orientation of the VR head-mounted display device wom by the user). The position of the first-person perspective camera includes a height of the first-person perspective camera, and the height of the first-person perspective camera refers to a height of the first-person perspective camera perpendicular to the ground.

The preset distance is a length of a projection, on the ground, of a connection line between the first-person perspective camera and the mirror camera.

In some embodiments, the preset distance includes a first vertical distance and a second vertical distance, where the first vertical distance is a vertical distance between the mirror camera and the virtual mirror, and the second vertical distance is a vertical distance between the first-person perspective camera and the virtual mirror. In this embodiment of the present disclosure, the first vertical distance may be set to a fixed value, for example, the first vertical distance is 1.5 m, to better simulate a scene of a user looking into a mirror in real life. For example, as shown in FIG. 5A, FIG. 5A is a schematic

diagram of a preset distance in an embodiment of the present disclosure. The figure shows a position relationship among a first-person perspective camera 10, a virtual mirror 11, and a mirror camera 12. A midpoint of a bottom side of the virtual mirror 11 is used as a coordinate origin, a first orientation of the mirror camera is used as a positive direction of a Z axis, and an upward direction perpendicular to the ground of the virtual mirror is used as a positive direction of a Y axis. The first-person perspective camera 10, the virtual mirror 11, and the mirror camera 12 are located in a same virtual space in the position relationship shown in the figure. The preset distance includes a first vertical distance D between the mirror camera 12 and the virtual mirror 11, and a second vertical distance L between the first-person perspective camera 10 and the virtual mirror 11.

It should be noted that the preset distance including the first vertical distance D and the second vertical distance L is merely an example of the preset distance when the virtual mirror is vertically arranged on the ground. It can be understood that in a virtual reality space, the position and the orientation of the virtual mirror may be set at will. For example, the virtual mirror is arranged to be inclined to the ground, and the preset distance is specifically determined based on a projection, on the ground, of a connection line between the first-person perspective camera and the mirror camera, and is not directly related to the virtual mirror. For ease of description, a process of determining the first position of the mirror camera is described below by using an example in which the preset distance includes the first vertical distance D and the second vertical distance L. Other cases of the preset distance are the same as or similar to this case, and details are not described herein again in the present disclosure.

In some embodiments, the first position of the mirror camera includes a height of the mirror camera. The height of the mirror camera refers to a height of the mirror camera in a direction perpendicular to the ground.

With reference to FIG. 5B, FIG. 5B is a schematic diagram of a height of a mirror camera according to an embodiment of the present disclosure. In a coordinate system shown in FIG. 5B, the first orientation of the mirror camera is a positive direction of a Z axis, an upward direction perpendicular to the ground of the virtual mirror is a positive direction of a Y axis, the position of the first-person perspective camera is (x1, y1, z1), the position of the virtual mirror (a midpoint of a bottom side) is (x2, y2, z2), and the height of the mirror camera is a coordinate value of the mirror camera in a Y axis direction, and is denoted as y3.

It should be noted that the virtual mirror in FIG. 5B is merely introduced for ease of calculation, and is only illustrative, and does not represent an actual position and orientation of the virtual mirror. The same applies to the virtual mirror in subsequent diagrams, which is not described repeatedly in the present disclosure.

In an implementation of this embodiment of the present disclosure, the height of the mirror camera is determined based on the height of the first-person perspective camera, that is, y3=y1; or the height of the mirror camera is determined based on a height of the virtual mirror perpendicular to the ground, that is, y3= M/2, where M is the height of the virtual mirror.

In an implementation of this embodiment of the present disclosure, the height of the mirror camera, that is, the coordinate value y3 of the mirror camera in the Y axis direction, is determined based on the coordinate value of the virtual mirror in the direction perpendicular to the ground and the height of the virtual mirror. As shown in Formula (1):

$$y3 = y2 + \frac{M}{2} \qquad (1)$$

where y2 is the coordinate value of the virtual mirror in the Y axis direction; and M is the height of the virtual mirror. In some embodiments, a bottom side of the virtual mirror is arranged on the ground, that is, y2=0, and y3=M/2.

The height of the mirror camera is determined based on the coordinate value y2 of the virtual mirror in the Y axis direction and the height M of the virtual mirror, so that the avatar presented in the virtual mirror is always kept at a center position, which is more in line with human eye habits and improves the user experience.

In some embodiments, the coordinate value y3 of the mirror camera in the Y axis direction is determined based on the coordinate value y2 of the virtual mirror in the Y axis direction, the height M of the virtual mirror, and a ratio coefficient, for example, 1.5. That is, $y3=1.5\times(y2+\frac{M}{2})$, so that the avatar presented in the virtual mirror is always kept at a middle-upper position of the virtual mirror. The height of the mirror camera is further adjusted by using the ratio coefficient, thereby improving flexibility. The ratio coefficient may be set according to an actual situation, which is not limited in the present disclosure.

The first position of the mirror camera further includes a coordinate value in the first orientation. Taking the foregoing virtual coordinate system as an example, the first position of the mirror camera further includes a coordinate value in a Z axis direction. In the virtual coordinate system, the position of the first-person perspective camera is (x1, y1, z1), and a coordinate value z3 of the mirror camera in the Z axis direction is determined based on a coordinate value z1 of the first-person perspective camera in the Z axis direction and the preset distance L+D. As shown in Formula (2):

$$z3 = z1 - (L + D) \qquad (2)$$

In the virtual space, a coordinate value of the mirror camera also needs to be determined in a direction perpendicular to the ground and also perpendicular to the

first orientation. In the foregoing virtual coordinate system, the direction perpendicular to the ground and also perpendicular to the first orientation is used as an X axis, and a coordinate value x3 of the mirror camera in the X axis is determined based on a coordinate value x1 of the first-person perspective camera in the X axis. As shown in Formula (3):

$$x3 = x1 \quad (3)$$

According to the foregoing embodiments, the first position of the mirror camera, which is expressed as three-axis coordinates in the virtual coordinate system, is determined based on the position of the first-person perspective camera, the position of the virtual mirror, the height of the virtual mirror, the preset distance, and the first orientation, thereby ensuring that the position of the mirror camera changes with a position change of the avatar, and the avatar is always presented in the virtual mirror.

In some embodiments, after the second orientation of the mirror camera is determined in response to the adjustment instruction for the mirror camera, a second position of the mirror camera is determined based on the position of the first-person perspective camera, the preset distance, and the second orientation. A specific implementation of this process is the same as or similar to that of determining the first position of the mirror camera, which is not described repeatedly in the present disclosure.

In some embodiments, the position of the avatar changes, and the position of the first-person perspective camera changes accordingly. In a virtual coordinate system, if the first-person perspective camera moves from an initial position (x1,y1,z1) to (x1',y1',z1'), to completely present the avatar in the virtual mirror, an implementation in this embodiment of the present disclosure is as follows. First, the height of the mirror camera in the initial state, that is, the coordinate value of the mirror camera in the Y axis direction, is determined based on the coordinate value y2 of the virtual mirror in the direction perpendicular to the ground and the height M of the virtual mirror, and is denoted as y0. As shown in Formula (4):

$$y0 = y2 + \frac{M}{2} \quad (4)$$

It indicates the height of the mirror camera when the first-person perspective camera is at the initial position (x1,y1,z1), which may be understood as an initial height.

It can be understood that the initial height of the mirror camera is the height of the mirror camera at an initial position, and a process of determining the initial height of the mirror camera is the same as or similar to the foregoing manner of determining the height of the mirror camera. For example, the initial height of the mirror camera may be determined based on the height of the first-person perspective camera and/or the height of the virtual mirror, which is not described repeatedly in the present disclosure.

After the initial height of the mirror camera is determined, an offset height s of the first-person perspective camera relative to a mirror midpoint in the direction perpendicular to the ground is determined, where the mirror midpoint is a midpoint of the virtual mirror in a height direction of the virtual mirror.

In some embodiments, the offset height s of the first-person perspective camera relative to the mirror midpoint in the direction perpendicular to the ground is determined based on the position of the first-person perspective camera, the height of the virtual mirror, and the position of the virtual mirror. As shown in Formula (5):

$$s = y1` - (y2 + \frac{M}{2}) \quad (5)$$

where y1' is a coordinate value of the first-person perspective camera in the direction perpendicular to the ground; M is the height of the virtual mirror; and y2 is the coordinate value of the virtual mirror in the direction perpendicular to the ground.

Then, a reference offset height b of the mirror camera in a height direction is determined based on the preset distance, the height of the virtual mirror, and a field of view of the mirror camera;

In some embodiments, as shown in FIG. 6, FIG. 6 is a schematic diagram of determining a reference offset height of a mirror camera according to an embodiment of the present disclosure. First, the field of view of the mirror camera is determined based on the first vertical distance D and a mirror half-height M/2 of the virtual mirror. As shown in Formula (6):

$$FOV = 2 * \arctan(\frac{\frac{M}{2}}{D}) \quad (6)$$

In an implementation of this embodiment of the present disclosure, the reference offset height b of the mirror camera in the height direction is determined based on the second vertical distance L and a field of view (Field Of View, FOV) of the mirror camera, where the reference offset height b is a corresponding reverse moving height of the mirror camera when the first-person perspective camera moves by half of the mirror height in the height direction. As shown in Formula (7):

$$b = L * \tan(\frac{FOV}{2}) \quad (7)$$

Generally, the offset height of the first-person perspective camera in the height direction is greater than half of the mirror height. As shown in FIG. 7, FIG. 7 is a schematic diagram of determining a height of a mirror camera according to an embodiment of the present disclosure. In an implementation of this embodiment of the present disclosure, an offset ratio a is determined based on the offset height s of the first-person perspective and the mirror half-height M/2 of the virtual mirror. As shown in Formula (8):

$$a = \frac{s}{\frac{M}{2}} = \frac{y1` - (y2 + \frac{M}{2})}{\frac{M}{2}} \quad (8)$$

Further, an offset height 1 of the mirror camera is determined based on the reference offset height b and the offset ratio a. As shown in Formula (9):

$$l = b * (-a) \quad (9)$$

Then, a height y3' of the mirror camera is determined based on the offset height 1 of the mirror camera and the height of the mirror midpoint. As shown in Formula (10):

$$y3` = y2 + \frac{M}{2} + l \quad (10)$$

According to the foregoing Formulas (6), (7), (8), (9), and (10), the height y3' of the mirror camera is obtained. As shown in Formula (11):

$$y3` = y2 + \frac{M}{2} + L * \tan(\frac{FOV}{2}) * \frac{y1` - (y2 + \frac{M}{2})}{\frac{M}{2}} \quad (11)$$

After the height of the mirror camera is determined, it may be determined that a coordinate of the mirror camera in the orientation of the mirror camera is z3'= z1'-(D+L), and a coordinate in an X axis orientation is x3'=x1', to obtain a first position ( $x1`, y2 + \frac{M}{2} + L * \tan(\frac{FOV}{2}) * \frac{y1` - (y2 + \frac{M}{2})}{\frac{M}{2}}$, z1'-(D+L)) of the mirror camera. Therefore, the position of the mirror camera changes with a position change of the avatar, so that the avatar is always completely presented in the virtual mirror, and a position at which the first image is displayed is aligned with the eyes, thereby providing a reference for the user to create or modify the avatar.

In the foregoing embodiments, the three-axis coordinates of the mirror camera change with the movement of the avatar when the first vertical distance D is a known quantity that does not change. The present disclosure further provides that when an initial value of the first vertical distance is known, and a field of view of the mirror camera does not change, a distance between the mirror camera and the virtual mirror is adjusted, to ensure that the avatar is always presented in the virtual mirror.

When the field of view of the mirror camera does not change, the position of the avatar changes. When the first-person perspective camera moves from (x1,y1,z1) to (x1',y1',z1'), because a field of view range of the mirror camera is limited, a height of the avatar created by the user may exceed a height that can be accommodated by the virtual mirror, and the avatar cannot be completely presented in the virtual mirror. In addition, because the user wears the VR head-mounted display device to perform an operation in a real environment, a complexity degree of the environment is uncontrollable. To ensure the user safety, the user is prevented from moving in the real environment as much as possible. Therefore, the position of the mirror camera is adjusted to completely display the avatar in the orientation of the mirror camera.

As shown in FIG. 8, FIG. 8 is a schematic diagram of determining a first position of a mirror camera according to an embodiment of the present disclosure. The figure shows projection points of a first-person perspective camera 10, a virtual mirror 11, and a mirror camera 12 in an YOZ plane. The first-person perspective camera 10 moves from a coordinate y1 to a coordinate y1' in a direction perpendicular to the ground. In an implementation of this embodiment of the present disclosure, a position of the mirror camera is determined by adjusting a first vertical distance between the mirror camera and the virtual mirror:

First, a maximum height Hmax of the avatar that can be presented by the virtual mirror is determined based on a field of view FOV of the mirror camera, an initial value d of the distance between the mirror camera and the virtual mirror, and a vertical distance L between the first-person perspective camera and the virtual mirror. As shown in Formula (12):

$$Hmax = (d + L) * \tan(\frac{FOV}{2}) \quad (12)$$

where $FOV = 2 * \arctan(\frac{\frac{M}{2}}{d})$, and the field of view remains unchanged.

A distance m by which the avatar exceeds the presentation height of the virtual mirror is determined based on a coordinate y1' of the first-person perspective camera in the direction perpendicular to the ground after moving. As shown in Formula (13):

$$m = y1` - Hmax \quad (13)$$

Then, a distance n that needs to be moved by the mirror camera in the first orientation is determined based on the field of view FOV of the mirror camera and the distance m. As shown in Formula (14):

$$n = \frac{m}{\tan(\frac{FOV}{2})} \quad (14)$$

A coordinate z3 of the mirror camera in the first orientation is determined. As shown in Formula (15):

$$z3 = z1 - (D + L) - n \qquad (15)$$

Therefore, when the field of view is a fixed value FOV, if the position of the first-person perspective camera changes, the first position of the mirror camera may be expressed as $(x1`, y2+\frac{M}{2}, z1\text{-}(D+L)\text{-}\frac{m}{\tan(\frac{FOV}{2})})$.

In the foregoing embodiments, when the avatar moves and the field of view of the mirror camera is fixed, the coordinate of the mirror camera in the first orientation is adjusted, so that the complete avatar is always presented in the virtual mirror, thereby improving a visual effect, providing a reference for the user to create or modify the avatar, and improving the user experience.

S203: Obtain a first image based on the first position and the first orientation, and display the first image on the virtual mirror.

After the first orientation of the mirror camera is determined in the foregoing embodiments, the first position of the mirror camera is determined. When the orientation of the mirror camera is the first orientation and remains unchanged, if the avatar moves, that is, the position of the first-person perspective camera changes, the first position of the mirror camera is determined based on the position of the first-person perspective camera and the preset distance, so that the mirror camera moves following the avatar. Then the first image is obtained at the first orientation and the first position of the mirror camera, and the first image is displayed on the virtual mirror, so that the user does not need to actively align with the virtual mirror in the virtual space. On the one hand, the user's movement space in the real world may be limited, making it difficult to find a suitable position or to align with the virtual mirror; on the other hand, the user is not required to stand at a specific alignment position of the mirror and no longer move to display the first image, which better simulates looking into the mirror, and enables looking into the mirror when the avatar moves randomly, so that the first image of the avatar is always presented on the virtual mirror no matter how the avatar moves, providing a reference for creating or modifying the avatar, and improving the user experience.

In addition, in the foregoing embodiments, when the orientation of the mirror camera changes from the first orientation to the second orientation, by determining the position of the mirror camera in the different orientation, the second image in the second orientation and the second position is obtained, and the first image is updated and displayed as the second image. This does not require that the avatar align with the virtual mirror at a specific position and in a specific posture, so that the user does not need to spend time and effort to find a specific position and posture in the virtual space, which is convenient for the user to view the avatar from different angles, and is suitable for a diverse virtual display scenario, thereby improving the user experience. In summary, this embodiment of the present disclosure provides an image display method. The method first determines a first orientation of a mirror camera, then determines a position of the mirror camera based on a position of a first-person perspective camera, a preset distance, and the first orientation, and then obtains a first image based on the first position and the first orientation, and displays the first image on a virtual mirror. This implements movement of the mirror camera following the avatar, thereby always presenting an image of the avatar in the virtual mirror, providing a reference for creating or modifying the avatar, and improving the user experience.

As shown in FIG. 9, FIG. 9 is a schematic diagram of a structure of an image display apparatus according to an embodiment of the present disclosure. The apparatus includes:

a processing module 901, configured to determine a first orientation of a mirror camera; and determine a first position of the mirror camera based on a position of a first-person perspective camera, a preset distance, and the first orientation; and

a display module 902, configured to obtain a first image based on the first position and the first orientation, and display the first image on a virtual mirror.

In some embodiments, the processing module 901 is further configured to determine a second orientation of the mirror camera in response to an adjustment instruction for the mirror camera; and determine a second position of the mirror camera based on the position of the first-person perspective camera, the preset distance, and the second orientation; and

the display module 902 is further configured to obtain a second image based on the second orientation and the second position, and update and display the second image on the virtual mirror.

In some embodiments, the first orientation is determined based on a direction of a perpendicular from an initial position of the first-person perspective camera to a mirror surface of the virtual mirror.

In some embodiments, the length of the projection, on the ground, of the connection line between the first-person perspective camera and the mirror camera is the preset distance.

In some embodiments, the position of the first-person perspective camera includes a height of the first-person perspective camera, the position of the mirror camera includes a height of the mirror camera, and the height of the mirror camera is determined based on the height of the first-person perspective camera and/or the height of the virtual mirror.

In some embodiments, the processing module 901 is specifically configured to determine a reference offset height of the mirror camera in a height direction based on the preset distance, the height of the virtual mirror, and a field of view of the mirror camera;

determine an offset ratio, where the offset ratio is a

ratio of an offset height to a mirror half-height of the virtual mirror, and the offset height is a height of the first-person perspective camera relative to a mirror midpoint of the virtual mirror;

determine an offset height of the mirror camera based on the reference offset height and the offset ratio; and determine a height of the mirror camera based on the offset height of the mirror camera and the height of the mirror midpoint.

In some embodiments, the first-person perspective camera, the virtual mirror, and the mirror camera are located in a same virtual space, and the virtual mirror is arranged perpendicular to the ground.

The foregoing modules may be implemented as software components executed on one or more general-purpose processors, or may be implemented as hardware, such as a programmable logic device and/or a dedicated integrated circuit, for performing some functions. In some embodiments, these modules may be embodied in the form of a software product, and the software product may be stored in a non-volatile storage medium. The non-volatile storage medium includes enabling a computer device (for example, a personal computer, a server, a network device, or a mobile terminal) to perform the method described in the embodiments of the present disclosure. In some embodiments, the foregoing modules may also be implemented on a single device, or may be distributed on a plurality of devices. Functions of these modules may be combined with each other, or may be further split into a plurality of sub-modules.

In summary, this embodiment of the present disclosure provides an image display apparatus. The apparatus first determines, by a processing module, a first orientation of a mirror camera, then determines a position of the mirror camera based on a position of a first-person perspective camera, a preset distance, and the first orientation, and then obtains, by a display module, a first image based on the first position and the first orientation, and displays the first image on a virtual mirror. This implements movement of the mirror camera following the avatar, thereby always presenting an image of the avatar in the virtual mirror, providing a reference for creating or modifying the avatar, and improving the user experience.

As shown in FIG. 10, FIG. 10 is a schematic diagram of a structure of an electronic device according to an embodiment of the present disclosure. The electronic device includes: a processor, a memory, and a computer program stored on the memory and executable on the processor. When the computer program is executed by the processor, the various processes of the image display method in the foregoing method embodiments are implemented. The same technical effect can be achieved. To avoid repetition, details are not described herein again.

An embodiment of the present disclosure provides a computer-readable storage medium. The computer-readable storage medium stores a computer program. When the computer program is executed by a processor, the various processes of the image display method in the foregoing method embodiments are implemented. The same technical effect can be achieved. To avoid repetition, details are not described herein again.

The computer-readable storage medium may be a Read-only memory (ROM), a Random access memory (RAM), a magnetic disk, or an optical disc.

An embodiment of the present disclosure provides a computer program product. The computer program product stores a computer program. When the computer program is executed by a processor, the various processes of the image display method in the foregoing method embodiments are implemented. The same technical effect can be achieved. To avoid repetition, details are not described herein again.

Persons skilled in the art should understand that the embodiments of the present disclosure may be provided as a method, a system, or a computer program product. Therefore, the present disclosure may be in a form of a complete hardware embodiment, a complete software embodiment, or an embodiment combining software and hardware. In addition, the present disclosure may be in a form of a computer program product implemented on one or more computer-readable storage media containing computer-readable program codes.

In the present disclosure, the processor may be a Central processing unit (CPU), or may be another general-purpose processor, a Digital signal processor (DSP), an Application-specific integrated circuit (ASIC), a Field programmable gate array (FPGA), or another programmable logic device, a discrete gate or transistor logic device, a discrete hardware component, or the like. The general-purpose processor may be a microprocessor, or the processor may be any conventional processor, or the like.

In the present disclosure, the memory may include a non-permanent memory, a Random access memory (RAM), and/or a non-volatile memory or other forms in a computer-readable medium, such as a Read-only memory (ROM) or a flash memory (flash RAM). The memory is an example of the computer-readable medium.

In the present disclosure, the computer-readable medium includes a permanent and non-permanent, removable and non-removable storage medium. The storage medium may implement information storage by any method or technology. The information may be computer-readable instructions, a data structure, a program module, or other data. Examples of the computer storage medium include, but are not limited to, a Phase change memory (PRAM), a Static random access memory (SRAM), a Dynamic random access memory (DRAM), another type of Random access memory (RAM), a Read-only memory (ROM), an Electrically erasable programmable read-only memory (EEPROM), a flash memory, or another memory technology, a Compact

disc read-only memory (CD-ROM), a Digital versatile disc (DVD), or another optical storage, a magnetic cassette tape, a magnetic disk storage, or another magnetic storage device, or any other non-transmission medium. The computer-readable medium may be used to store information accessible by a computing device. According to the definition in this specification, the computer-readable medium does not include transitory computer-readable media, such as a modulated data signal and a carrier.

It should be noted that in this specification, relational terms such as "first" and "second" are merely used to distinguish one entity or operation from another entity or operation, and do not necessarily require or imply any actual relationship or order between these entities or operations. Moreover, the terms "include", "comprise", or any other variants thereof are intended to cover non-exclusive inclusion, so that a process, a method, an article, or an apparatus that includes a list of elements not only includes those elements, but also includes other elements not explicitly listed, or further includes elements inherent to such process, method, article, or apparatus. Without more restrictions, an element defined by a statement "include/comprise one..." does not exclude the existence of another identical element in the process, method, article, or apparatus that includes the element.

The foregoing are merely specific implementations of the present disclosure, which enables those skilled in the art to understand or implement the present disclosure. Various modifications to these embodiments will be apparent to those skilled in the art. The general principles defined herein may be implemented in other embodiments without departing from the spirit or scope of the present disclosure. Therefore, the present disclosure will not be limited to these embodiments shown in this specification, but shall comply with the widest scope consistent with the principles and novel features disclosed herein.

A mirror image display method and apparatus, an electronic device, and medium in an extended reality space are provided in this embodiment of the present disclosure. In the mirror image display method in the extended reality space provided in this embodiment of the present disclosure, a mirror image display adjustment instruction triggered by a user for a target object is received, parameter information of a virtual camera is adjusted based on the mirror image display adjustment instruction, and a target object is displayed in a virtual display based on a display image obtained by the virtual camera after the parameter information is adjusted. The mirror image display adjustment instruction is configured to instruct to adjust a display proportion of the target object in the virtual display, that is, in this technical solution, the user instructs, by triggering the mirror image display adjustment instruction, to adjust the display proportion of the target object in the virtual display. After the mirror image display adjustment instruction is received, the parameter information of the virtual camera is adjusted. A display image obtained by the virtual camera after the parameter information of the virtual camera is adjusted changes accordingly, so that the display proportion of the target object in the display image also changes. Based on this, the display proportion of the display object displayed in the virtual display is adjusted. In this process, the display proportion of the target object can be adjusted by adjusting the parameter of the virtual camera, without the user moving in the extended reality space to adjust, thereby improving the user viewing effect of the target object in the extended reality, and facilitating the user to adjust the parameter of the target object.

The technical solution of the present disclosure may be applied to an extended reality scenario. The extended reality includes but is not limited to augmented reality (AR), virtual reality (VR), mixed reality (MR), and the like. As shown in FIG. 11a, FIG. 11a is a schematic diagram of an application scenario of a mirror image display method in an extended reality space according to an embodiment of the present disclosure. A user 111 wears a head-mounted display device. When the user 111 enters an application, the user expects to modify a role image of a virtual character image. A virtual mirror surface 112 instantly appears at a position 1.5 m away in a direction pointed to by a virtual ray emitted from the head-mounted display device and the user. When the user enters an editing module of the virtual character image from a home interface of the application, as shown in FIG. 11b, the virtual mirror surface 112 in FIG. 11b is configured to display the virtual character image, a virtual camera 113 is configured to photograph the virtual character image displayed on the virtual mirror surface 112, and a virtual image selection panel 114 is configured to select different virtual character images. In addition, when the user exits the editing module of the virtual character image, the virtual mirror surface 112 disappears at the same time. For example, the virtual mirror surface 112 may be set as a floor-length mirror, a height of the virtual mirror surface 112 may be set to 2 m, and a width of the virtual mirror surface 112 may be set to 1 m. The virtual mirror surface 112 is visible only to the current user who calls up the virtual mirror surface 112, and is not visible to other users.

The technical solution of the present disclosure is described below with reference to several embodiments.

FIG. 12 is a schematic flowchart of a mirror image display method in an extended reality space according to an embodiment of the present disclosure. With reference to FIG. 12, the mirror image display method in the extended reality space includes the following steps S21 to S23:

S21: Receive a mirror image display adjustment instruction triggered by a user for a target object.

The mirror image display adjustment instruction is configured to instruct to adjust a display proportion of the target object in a virtual display. The target object may

be understood as a virtual image corresponding to the user in an extended reality scenario, and may be a virtual character image or another virtual image corresponding to the user, for example, an animal or a plant. This is not limited in the present disclosure. For example, the virtual display may be a virtual mirror, and a display position of the virtual display in a virtual display space may be set based on a scenario requirement, and is usually set at a position convenient for the user to operate.

The user may adjust a visual image of the target object by adjusting a parameter of the target object. Taking the target object as a virtual character image corresponding to the user as an example, the user may adjust eyelashes, eyes, a nose, and the like of the virtual character image. Before, during, or after the adjustment, the user usually needs to enlarge or reduce the virtual character image, to facilitate adjustment or viewing an adjustment effect. For example, when the user needs to adjust the eyelashes of the virtual character image, the virtual character image needs to be enlarged, to facilitate precise adjustment of the eyelashes. After the adjustment is completed, the virtual character image needs to be reduced, to facilitate observing an overall effect after the adjustment.

In the present disclosure, a size of the target object is adjusted by adjusting the display proportion of the target object in the virtual display. For example, increasing the display proportion of the target object in the virtual display is equivalent to increasing the target object, and reducing the display proportion of the target object in the virtual display is equivalent to reducing the target object.

When the user virtually adjusts the display proportion of the target object in the virtual display, the mirror image display adjustment instruction is triggered.

Modes in which the user triggers the mirror image display adjustment instruction include but are not limited to the following possible implementations:
For example, an adjustment instruction interface is displayed on the virtual display. In one case, the adjustment instruction may be to enlarge or reduce. As shown in FIG. 13a, a display proportion of the target object may be adjusted by pressing a zoom function button in FIG. 13a. A left image is an original image, and a right image shows a display proportion of the target object, in the virtual display, which has been adjusted based on a reduction instruction after the zoom function button is pressed. As shown in FIG. 13b, a display proportion of the target object may be adjusted by pressing a zoom function button in FIG. 13b. A left image is an original image, and a right image show a display proportion of the target object, in the virtual display, which has been adjusted based on an enlargement instruction after the zoom function button is pressed.

In another case, a specific adjustment proportion may be set, for example, to enlarge by 1 time, enlarge by 1.5 times, or enlarge by 2 times; or to reduce by 1 time, reduce by 1.5 times, or reduce by 2 times. As shown in FIG. 13c, a display proportion of the target object may be adjusted by pressing a zoom factor button in FIG. 13c. A left image in FIG. 13c is an original image, and a right image in FIG. 13c shows a display proportion of the target object, in the virtual display, which has been reduced by 1 time after the zoom factor button is pressed. As shown in FIG. 13d, a left image in FIG. 13d is an original image, and a right image in FIG. 13d shows a display proportion of the target object, in the virtual display, which has been enlarged by 1 time. In addition, the display proportion of the target object in the virtual display interface may be adjusted by setting a specific adjustment step. Details are not described herein.

S22: Adjust parameter information of a virtual camera based on the mirror image display adjustment instruction.

The parameter information includes a field of view and/or a distance between the virtual camera and the target object.

It should be noted that the virtual camera (which may be, for example, a mirror camera) described in the present disclosure refers to a virtual object that implements image acquisition in a virtual reality scenario. The virtual object is configured to acquire, in the virtual reality scenario, an image including the target object. A size of the target object in the acquired image may be adjusted by adjusting a position and an orientation of the virtual object when the virtual object acquires the image. By introducing the concept of the virtual camera, it is assumed that an image including the target object is acquired by using a virtual camera at a specific position and at a specific field of view. A size of the target object in the acquired image may be adjusted by adjusting a position of the virtual camera away from the target object and/or the field of view. In other words, the concept of the virtual camera is introduced to facilitate description of the image acquisition process and a principle of size change of the target object in the acquired image. However, the virtual camera does not actually exist in the virtual reality environment, and the virtual camera is not displayed.

For example, when a photographing position remains unchanged, when a field of view is a default angle, a range of a photographed image is shown in FIG. 14a. When the field of view increases, a range of a photographed image is shown in FIG. 14b. When the field of view decreases, a range of a photographed image is shown in FIG. 14c. If the field of view remains unchanged, when a photographing position is a default position, for example, in this embodiment, the default position may be 1.5 m, a range of a photographed image is shown in FIG. 14d. When the photographing position is moved away, that is, a distance between the position of the virtual camera and the virtual mirror surface increases, for example, when the distance between the position of the virtual camera and the virtual mirror surface is 1.8 m, a range of a photographed image is shown in FIG. 14e. When the photographing position is moved closer, that is, a distance between the position of the

virtual camera and the virtual mirror surface decreases, for example, when the distance between the position of the virtual camera and the virtual mirror surface is 0.8 m, a range of a photographed image is shown in FIG. 14f.

Based on the received instruction from the user to enlarge or reduce the portrait in the mirror, the field of view and/or the distance between the virtual camera and the target object are adjusted, so that the user can see an enlarged or reduced image, and the user can watch a clearer image in the virtual display without moving the position.

S23: Display the target object in the virtual display based on a display image obtained by the virtual camera after the parameter information is adjusted.

Displaying the target object in the virtual display based on the display image obtained by the virtual camera after the parameter information is adjusted includes but is not limited to the following possible implementations:

In a possible implementation, a distance between a near clipping plane of the virtual camera and the target object is determined as the preset distance, that is, the image content finally obtained by the virtual camera is content in an extended reality scene within a preset distance range of the target object.

In another possible implementation, a distance between a near clipping plane of the virtual camera and the target object is determined as a distance between the target object and the virtual display, where the target object is movable in the extended reality space, and a position of the virtual display in the extended reality space is relatively fixed, that is, the image content finally obtained by the virtual camera is content in an extended reality scene within a range between the target object and the virtual display, and the range changes with movement of the target object. By setting the distance between the target object and the near clipping plane, it can be ensured that the content displayed on the virtual display is closer to a feeling of the user when using a real mirror.

In the mirror image display method in the extended reality space provided in this embodiment of the present disclosure, a mirror image display adjustment instruction triggered by a user for a target object is received, parameter information of a virtual camera is adjusted based on the mirror image display adjustment instruction, and the target object is displayed in a virtual display based on a display image obtained by the virtual camera after the parameter information is adjusted. The mirror image display adjustment instruction is configured to instruct to adjust a display proportion of the target object in the virtual display, that is, in this technical solution, the user instructs, by triggering the mirror image display adjustment instruction, to adjust the display proportion of the target object in the virtual display. After the mirror image display adjustment instruction is received, the parameter information of the virtual camera is adjusted. The display image obtained by the virtual camera after the parameter information of the virtual camera is adjusted changes accordingly, so that the display proportion of the target object in the display image also changes. Based on this, the display proportion of the display object displayed on the virtual display is adjusted. In this process, the display proportion of the target object can be adjusted by adjusting the parameter of the virtual camera, without the user moving in the extended reality space to adjust, thereby improving the user viewing effect of the target object in the extended reality, and facilitating the user to adjust the parameter of the target object.

In some embodiments, on the basis of the foregoing embodiments, taking that the parameter information of the virtual camera includes the field of view as an example, the parameter information of the virtual camera is adjusted based on the mirror image display adjustment instruction, that is, a field of view of the virtual camera is reduced based on the mirror image display adjustment instruction, or the field of view of the virtual camera is increased based on the mirror image display adjustment instruction. Specifically, the method includes but is not limited to the following possible implementations:

In one scenario, the mirror image display adjustment instruction is specifically used to instruct to enlarge or reduce a display proportion of the target object in the virtual display, but the user is not required to specify a specific display proportion.

The adjustment may be performed according to a fixed step. For example, the user triggers a mirror image display adjustment instruction for enlargement once, and the adjusted display proportion is twice the display proportion before adjustment. The user triggers a mirror image display adjustment instruction for reduction once, and the adjusted display proportion is 1/2 of the display proportion before adjustment.

The adjustment may also be performed according to a non-fixed step. For example, the adjustment is first performed according to a large step, and then performed according to a small step, which may also be understood as coarse adjustment at first and then fine adjustment. For example, the user triggers a mirror image display adjustment instruction for enlargement once, and the adjusted display proportion is 4 times the display proportion before adjustment. The user triggers the mirror image display adjustment instruction for enlargement again, and the adjusted display proportion is 2 times the display proportion before adjustment. The user triggers a mirror image display adjustment instruction for reduction once, and the adjusted display proportion is 1/4 of the display proportion before adjustment. The user triggers the mirror image display adjustment instruction for reduction again, and the adjusted display proportion is 1/2 of the display proportion before adjustment.

When the mirror image display adjustment instruction is specifically used to instruct to enlarge the display proportion of the target object in the virtual display, the field of view of the virtual camera is reduced based on the mirror image display adjustment instruction.

When the mirror image display adjustment instruction is specifically used to instruct to reduce the display proportion of the target object in the virtual display, the field of view of the virtual camera is increased based on the mirror image display adjustment instruction.

In another scenario, the mirror image display adjustment instruction is specifically used to instruct to adjust the display proportion of the target object in the virtual display to a target proportion.

A target adjustment parameter may be obtained based on the target proportion, and the virtual camera is adjusted based on the target adjustment parameter.

In some embodiments, a target field of view of the virtual camera may be obtained based on an initial field of view of the virtual camera and the target proportion.

It is assumed that an initial field of view of the current virtual camera is $\theta_0$, and the target proportion is m. The target field of view $\theta_x$ may be obtained based on the following formula:

$$\theta_x = 2\arctan \mathrm{m} \cdot \tan\frac{\theta_0}{2}$$

In the foregoing embodiments, when the target field of view is within a preset field of view range, the field of view of the virtual camera may be directly adjusted to the target field of view.

However, in some scenarios, the field of view of the virtual camera may be adjusted, and a distance between the virtual camera and the target object is adjusted at the same time, to implement adjusting the display proportion of the target object in the virtual display to the target proportion. For example, when the target field of view is not within the preset field of view range, when the target field of view is too small, a stereoscopic effect is not presented. When the target field of view is too large, a fisheye problem occurs. Therefore, when the target field of view is too large or too small, when the parameter of the camera is adjusted, a photographing position of the virtual camera is further adjusted in combination, so that the display proportion of the target object in the virtual display is the target proportion. Therefore, the problems of insufficient stereoscopic effect or fisheye distortion are avoided.

Specifically, a target distance between the virtual camera and the target object is obtained based on an initial field of view of the virtual camera, a preset field of view, an initial distance between the virtual camera and the target object, and the target proportion. First, the field of view of the virtual camera is adjusted to the preset field of view, and the virtual camera is adjusted to a position that is away from the target object by the target distance.

It is assumed that the initial field of view is $\theta_0$, the initial field of view refers to the field of view of the virtual camera before adjustment, the preset field of view is $\theta_1$, the initial distance between the virtual camera and the target object is 's$_0$', the initial distance refers to a distance between the virtual camera and the target object before adjustment, and the target proportion is m. The target distance $s_x$ between the virtual camera and the target object is:

$$s_x = \frac{s_0 \cdot \tan\frac{\theta_0}{2}}{m \tan\frac{\theta_1}{2}}$$

In the foregoing embodiments, the preset field of view may be a first preset field of view or a second preset field of view. It may be considered that when the target field of view is less than the first preset field of view, a collected image has no stereoscopic effect. When the target field of view is greater than the second preset field of view, a collected image has a fisheye distortion.

Specifically, if the target field of view is less than the first preset field of view, the target distance between the virtual camera and the target object is obtained based on a size of the target object, the first preset field of view, and the target proportion; and the field of view of the virtual camera is adjusted to the first preset field of view, and the virtual camera is adjusted to a position that is away from the target object by the target distance.

It is assumed that the initial field of view is $\theta_0$, the first preset field of view is $\theta_{11}$, the initial distance between the virtual camera and the target object is $s_0$, and the target proportion is m. The target distance $s_{x1}$ between the virtual camera and the target object may be obtained based on the following formula:

$$s_{x1} = \frac{s_0 \cdot \tan\frac{\theta_0}{2}}{m \tan\frac{\theta_{11}}{2}}$$

If the target field of view is greater than the second preset field of view, the target distance between the virtual camera and the target object is obtained based on a size of the target object, the second preset field of view, and the target proportion; and the field of view of the virtual camera is adjusted to the second preset field of view, and the virtual camera is adjusted to a position that is away from the target object by the target distance.

It is assumed that the initial field of view is $\theta_0$, the second preset field of view is $\theta_{12}$, the initial distance between the virtual camera and the target object is $s_0$, and the target proportion is m. The target distance $s_{x2}$ between the virtual camera and the target object may be obtained based on the following formula:

$$s_{x2}=\frac{s_0\cdot\tan\frac{\theta_0}{2}}{m\tan\frac{\theta_{12}}{2}}$$

In this embodiment, the field of view of the virtual camera and the distance between the virtual camera and the target object are adjusted, to implement adjusting the display proportion of the target object in the virtual display to the target proportion. Therefore, the problems of insufficient stereoscopic effect or fisheye distortion are avoided.

In the foregoing embodiments, the parameter information of the virtual camera may further include the distance between the virtual camera and the target object. The display proportion of the target object in the virtual display may be adjusted by separately adjusting the distance between the virtual camera and the target object.

When the mirror image display adjustment instruction is specifically used to instruct to enlarge the display proportion of the target object in the virtual display, the distance between the virtual camera and the target object is adjusted to be closer based on the mirror image display adjustment instruction.

When the mirror image display adjustment instruction is specifically used to instruct to reduce the display proportion of the target object in the virtual display, the distance between the virtual camera and the target object is adjusted to be farther based on the mirror image display adjustment instruction.

In another scenario, the mirror image display adjustment instruction is specifically used to instruct to adjust the display proportion of the target object in the virtual display to a target proportion.

A target adjustment parameter may be obtained based on the target proportion, and the virtual camera is adjusted based on the target adjustment parameter.

In some embodiments, a target distance between the virtual camera and the target object may be obtained based on an initial distance between the virtual camera and the target object and the target proportion.

It is assumed that an initial distance between the virtual camera and the target object is $s_0$, and the target proportion is m. The target distance $s_{x3}$ between the virtual camera and the target object may be obtained based on the following formula:

$$s_{x3}=m\cdot s_0$$

In the foregoing embodiments, the solution of adjusting the display proportion of the target object in the virtual display by adjusting the field of view of the virtual camera and the solution of adjusting the display proportion of the target object in the virtual display by adjusting a photographing position of the virtual camera may be used independently or in combination. This is not limited in the present disclosure. The implementation principles and the technical effects are similar, and details are not described one by one.

Based on a same inventive concept, as an implementation of the foregoing method, an embodiment of the present disclosure further provides a mirror image display apparatus in an extended reality space. This embodiment corresponds to the foregoing method embodiment. For ease of reading, details in the foregoing method embodiment are not repeatedly described one by one in this embodiment, but it should be clear that the mirror image display apparatus in the extended reality space in this embodiment can correspondingly implement all the content in the foregoing method embodiment.

An embodiment of the present disclosure provides a mirror image display apparatus in an extended reality space. FIG. 15 is a schematic diagram of a structure of the mirror image display apparatus in the extended reality space. As shown in FIG. 15, the mirror image display apparatus in the extended reality space includes:

an adjustment instruction receiving module 510, configured to receive a mirror image display adjustment instruction triggered by a user for a target object, where the mirror image display adjustment instruction is configured to instruct to adjust a display proportion of the target object in a virtual display;
a parameter information adjustment module 520, configured to adjust parameter information of a virtual camera based on the mirror image display adjustment instruction; and
a target object display module 530, configured to display the target object in the virtual display based on a display image obtained by the virtual camera after the parameter information is adjusted.

In some embodiments, the parameter information includes a field of view; and

the parameter information adjustment module 520 is specifically configured to reduce the field of view of the virtual camera based on the mirror image display adjustment instruction; or
increase the field of view of the virtual camera based on the mirror image display adjustment instruction.

In some embodiments, the parameter information includes a field of view;

the mirror image display adjustment instruction is specifically used to instruct to adjust the display proportion of the target object in the virtual display to a target proportion; and
the parameter information adjustment module 520 is specifically configured to obtain a target adjustment parameter based on the target proportion, where the target adjustment parameter includes a target field of

view; and

adjust the virtual camera based on the target adjustment parameter.

In some embodiments, the parameter information adjustment module 520 is specifically configured to obtain the target field of view of the virtual camera based on an initial field of view of the virtual camera and the target proportion.

In some embodiments, the target field of view is not within a preset field of view range; and

the parameter information adjustment module 520 is specifically configured to obtain a target distance between the virtual camera and the target object based on an initial field of view of the virtual camera, a preset field of view, an initial distance between the virtual camera and the target object, and the target proportion; and

adjust the field of view of the virtual camera to the preset field of view, and adjust the virtual camera to a position that is away from the target object by the target distance.

In some embodiments, the parameter information includes a distance between the virtual camera and the target object; and

the parameter information adjustment module 520 is specifically configured to adjust the distance between the virtual camera and the target object to be closer based on the mirror image display adjustment instruction; or

adjust the distance between the virtual camera and the target object to be farther based on the mirror image display adjustment instruction.

In some embodiments, the target object display module 530 is further configured to determine a distance between a near clipping plane of the virtual camera and the target object as the preset distance; or

determine a distance between a near clipping plane of the virtual camera and the target object as a distance between the target object and the virtual display.

The foregoing modules may be implemented as software components executed on one or more general-purpose processors, or may be implemented as hardware, such as a programmable logic device and/or a dedicated integrated circuit, for performing some functions. In some embodiments, these modules may be embodied in the form of a software product, and the software product may be stored in a non-volatile storage medium. The non-volatile storage medium includes enabling a computer device (for example, a personal computer, a server, a network device, or a mobile terminal) to perform the method described in the embodiments of the present disclosure. In some embodiments, the foregoing modules may also be implemented on a single device, or may be distributed on a plurality of devices. Functions of these modules may be combined with each other, or may be further split into a plurality of sub-modules.

The mirror image display apparatus in the extended reality space provided in this embodiment may perform the mirror image display method in the extended reality space provided in the foregoing method embodiment. The implementation principle and the technical effect are similar, and details are not described herein again.

Based on a same inventive concept, an embodiment of the present disclosure further provides an electronic device. FIG. 16 is a schematic diagram of a structure of an electronic device according to an embodiment of the present disclosure. As shown in FIG. 16, the electronic device provided in this embodiment includes a memory 61 and a processor 62. The memory 61 is configured to store a computer program. The processor 62 is configured to implement the mirror image display method in the extended reality space provided in the foregoing embodiment when the computer program is executed.

Based on a same inventive concept, an embodiment of the present disclosure further provides a computer-readable storage medium, where the computer-readable storage medium stores a computer program, and when the computer program is executed by a computing device, the computing device is enabled to implement the mirror image display method in the extended reality space provided in the foregoing embodiment.

Based on a same inventive concept, an embodiment of the present disclosure further provides a computer program product. When a program contained in the computer program product runs on a computer, the computer is enabled to implement the mirror image display method in the extended reality space provided in the foregoing embodiment.

Some embodiments of the present disclosure further provide a computer program, including instructions that, when executed by a processor, cause the processor to perform the image display method and/or the mirror image display method in the extended reality space in any one of the foregoing embodiments.

Persons skilled in the art should understand that the embodiments of the present disclosure may be provided as a method, a system, or a computer program product. Therefore, the present disclosure may be in a form of a complete hardware embodiment, a complete software embodiment, or an embodiment combining software and hardware. In addition, the present disclosure may be in a form of a computer program product implemented on one or more computer-readable storage media containing computer-readable program codes.

The processor may be a Central processing unit (CPU), or may be another general-purpose processor, a Digital signal processor (DSP), an Application-specific integrated circuit (ASIC), a Field programmable gate array (FPGA), or another programmable logic device,

a discrete gate or transistor logic device, a discrete hardware component, or the like. The general-purpose processor may be a microprocessor, or the processor may be any conventional processor, or the like.

The memory may include a non-permanent memory, a Random access memory (RAM), and/or a non-volatile memory or other forms in a computer-readable medium, such as a Read-only memory (ROM) or a flash memory (flash RAM). The memory is an example of the computer-readable medium.

The computer-readable medium includes a permanent and non-permanent, removable and non-removable storage medium. The storage medium may implement information storage by any method or technology. The information may be computer-readable instructions, a data structure, a program module, or other data. Examples of the computer storage medium include, but are not limited to, a Phase change memory (PRAM), a Static random access memory (SRAM), a Dynamic random access memory (DRAM), another type of Random access memory (RAM), a read-only memory (ROM), an Electrically erasable programmable read-only memory (EEPROM), a flash memory, or another memory technology, a Compact disc read-only memory (CD-ROM), a Digital versatile disc (DVD), or another optical storage, a magnetic cassette tape, a magnetic disk storage, or another magnetic storage device, or any other non-transmission medium. The computer-readable medium may be used to store information accessible by a computing device. According to the definition in this specification, the computer-readable medium does not include transitory media, such as a modulated data signal and a carrier.

Finally, it should be noted that the foregoing embodiments are merely intended for describing the technical solutions of the present disclosure, but not for limiting the present disclosure. Although the present disclosure is described in detail with reference to the foregoing embodiments, persons of ordinary skill in the art should understand that they may still make modifications to the technical solutions described in the foregoing embodiments, or make equivalent replacements to some or all technical features thereof. However, these modifications or replacements do not make the essence of corresponding technical solutions depart from the scope of the technical solutions of the embodiments of the present disclosure.

## Claims

**1.** An image display method, comprising:

determining a first orientation of a mirror camera;
determining a first position of the mirror camera based on a position of a first-person perspective camera, a preset distance, and the first orientation; and
obtaining a first image based on the first position and the first orientation, and displaying the first image on a virtual mirror.

**2.** The method according to claim 1, wherein the method further comprises:

determining a second orientation of the mirror camera in response to an adjustment instruction for the mirror camera;
determining a second position of the mirror camera based on the position of the first-person perspective camera, the preset distance, and the second orientation;
obtaining a second image based on the second orientation and the second position; and
updating, and displaying the second image on the virtual mirror.

**3.** The method according to claim 1 or 2, wherein the first orientation is determined based on a perpendicular direction from an initial position of the first-person perspective camera to a mirror surface of the virtual mirror.

**4.** The method according to any one of claims 1 to 3, wherein the preset distance is a length of a projection, on the ground, of a connection line between the first-person perspective camera and the mirror camera.

**5.** The method according to any one of claims 1 to 4, wherein the position of the first-person perspective camera comprises a height of the first-person perspective camera, and the position of the mirror camera comprises a height of the mirror camera; and the height of the mirror camera is determined based on the height of the first-person perspective camera and/or a height of the virtual mirror.

**6.** The method according to claim 5, wherein a manner of determining the height of the mirror camera comprises:

determining a reference offset height of the mirror camera in a height direction based on the preset distance, the height of the virtual mirror, and a field of view of the mirror camera;
determining an offset ratio, wherein the offset ratio is a ratio of an offset height to a mirror half-height of the virtual mirror, and the offset height is a height of the first-person perspective camera relative to a mirror midpoint of the virtual mirror;
determining a mirror camera offset height based on the reference offset height and the offset ratio; and
determining the height of the mirror camera

based on the mirror camera offset height and the height of the mirror midpoint.

**7.** The method according to any one of claims 1 to 6, wherein the first-person perspective camera, the virtual mirror, and the mirror camera are in a same virtual space, and the virtual mirror is arranged perpendicular to the ground.

**8.** The method according to claim 7, wherein the method is applied to a VR head-mounted display device.

**9.** An image display apparatus, comprising:

a processing module, configured to determine a first orientation of a mirror camera, and determine a first position of the mirror camera based on a position of a first-person perspective camera, a preset distance, and the first orientation; and
a display module, configured to obtain a first image based on the first position and the first orientation, and display the first image on a virtual mirror.

**10.** A mirror image display method in an extended reality space, comprising:

receiving a mirror image display adjustment instruction triggered by a user for a target object, wherein the mirror image display adjustment instruction is configured to instruct to adjust a display proportion of the target object in a virtual display;
adjusting parameter information of a virtual camera based on the mirror image display adjustment instruction; and
displaying the target object in the virtual display based on a display image obtained by the virtual camera after the parameter information is adjusted.

**11.** The method according to claim 10, wherein the parameter information comprises a field of view; and the adjusting parameter information of the virtual camera based on the mirror image display adjustment instruction comprises:

reducing the field of view of the virtual camera based on the mirror image display adjustment instruction; or
increasing the field of view of the virtual camera based on the mirror image display adjustment instruction.

**12.** The method according to claim 10 or 11, wherein the parameter information comprises a field of view;
the mirror image display adjustment instruction is specifically configured to instruct to adjust the display proportion of the target object in the virtual display to a target proportion; and
the adjusting parameter information of the virtual camera based on the mirror image display adjustment instruction comprises:

obtaining a target adjustment parameter based on the target proportion, wherein the target adjustment parameter comprises a target field of view; and
adjusting the virtual camera based on the target adjustment parameter.

**13.** The method according to claim 12, wherein the obtaining the target adjustment parameter based on the target proportion comprises:
obtaining the target field of view of the virtual camera based on an initial field of view of the virtual camera and the target proportion.

**14.** The method according to claim 13, wherein the target field of view is not within a preset field of view range; and
the adjusting the virtual camera based on the target adjustment parameter comprises:

obtaining a target distance between the virtual camera and the target object based on the initial field of view of the virtual camera, a preset field of view, an initial distance between the virtual camera and the target object, and the target proportion; and
adjusting the field of view of the virtual camera to the preset field of view, and adjusting the virtual camera to a position that is away from the target object by the target distance.

**15.** The method according to any one of claims 10 to 14, wherein the parameter information comprises a distance between the virtual camera and the target object; and
the adjusting parameter information of the virtual camera based on the mirror image display adjustment instruction comprises:

adjusting the distance between the virtual camera and the target object to be closer based on the mirror image display adjustment instruction; or
adjusting the distance between the virtual camera and the target object to be farther based on the mirror image display adjustment instruction.

**16.** The method according to any one of claims 10 to 15, further comprising:

determining a distance between a near clipping plane of the virtual camera and the target object as a preset distance; or
determining a distance between a near clipping plane of the virtual camera and the target object as a distance between the target object and the virtual display.

**17.** A mirror image display apparatus in an extended reality space, comprising:

an adjustment instruction receiving module, configured to receive a mirror image display adjustment instruction triggered by a user for a target object, wherein the mirror image display adjustment instruction is configured to instruct to adjust a display proportion of the target object in a virtual display;
a parameter information adjustment module, configured to adjust parameter information of a virtual camera based on the mirror image display adjustment instruction; and
a target object display module, configured to display the target object in the virtual display based on a display image obtained by the virtual camera after the parameter information is adjusted.

**18.** An electronic device, comprising a processor, a memory, and a computer program stored on the memory and executable on the processor, wherein the computer program, when executed by the processor, causes the image display method according to any one of claims 1 to 8 and/or the mirror image display method in the extended reality space according to any one of claims 10 to 16 to be implemented.

**19.** A computer-readable storage medium, comprising: a computer program stored on the computer-readable storage medium, wherein the computer program, when executed by a processor, causes the image display method according to any one of claims 1 to 8 and/or the mirror image display method in the extended reality space according to any one of claims 10 to 16 to be implemented.

**20.** A computer program product, comprising instructions that, when executed by a processor, cause the processor to implement the image display method according to any one of claims 1 to 8 and/or the mirror image display method in the extended reality space according to any one of claims 10 to 16.

**21.** A computer program, comprising instructions that, when executed by a processor, cause the processor to implement the image display method according to any one of claims 1 to 8 and/or the mirror image display method in the extended reality space according to any one of claims 10 to 16.

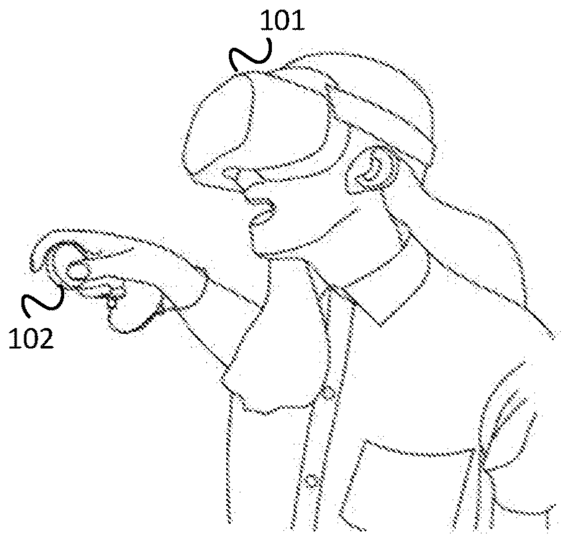


FIG. 1A

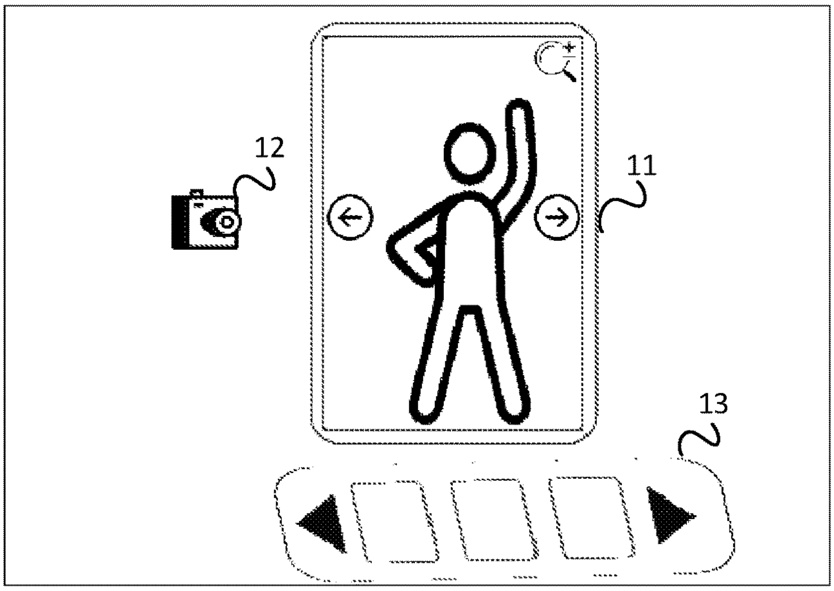


FIG. 1B

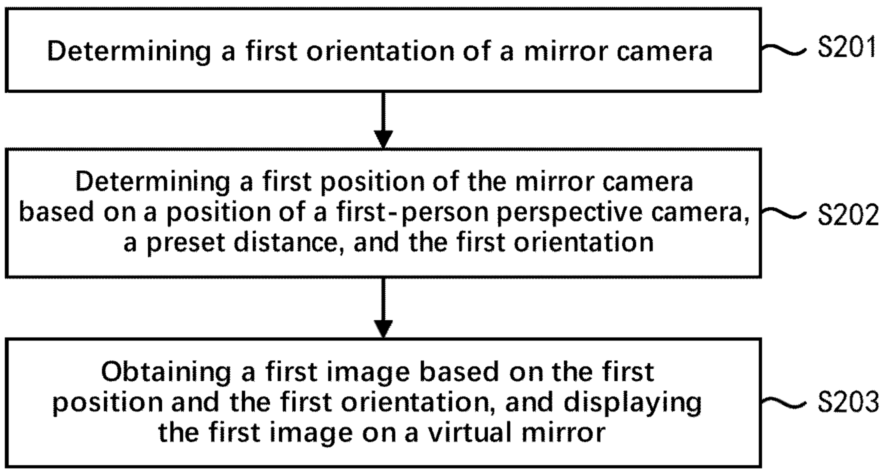
Determining a first orientation of a mirror camera
S201
Determining a first position of the mirror camera based on a position of a first-person perspective camera, a preset distance, and the first orientation
S202
Obtaining a first image based on the first position and the first orientation, and displaying the first image on a virtual mirror
S203

FIG. 2

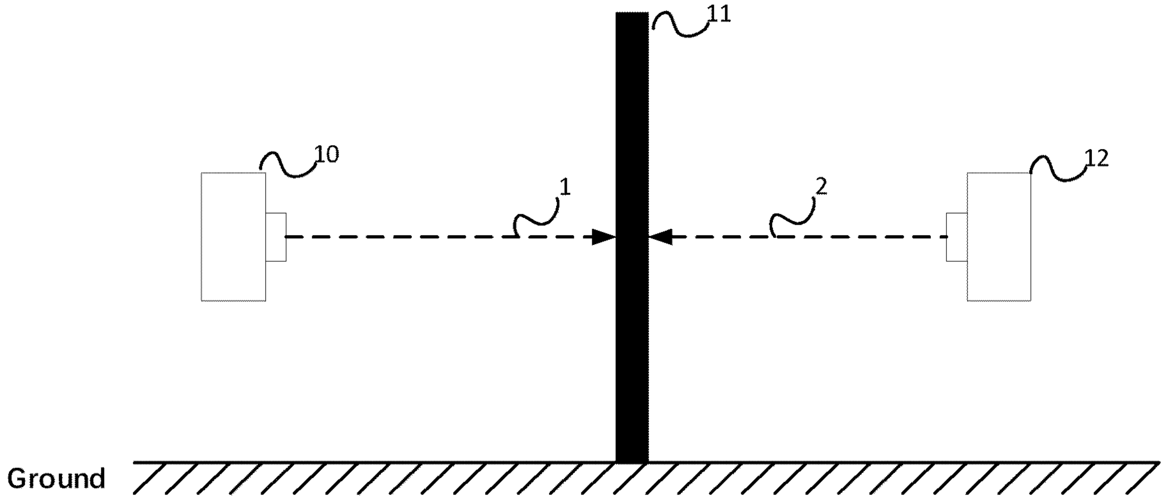
11
10
1
2
12
Ground

FIG. 3

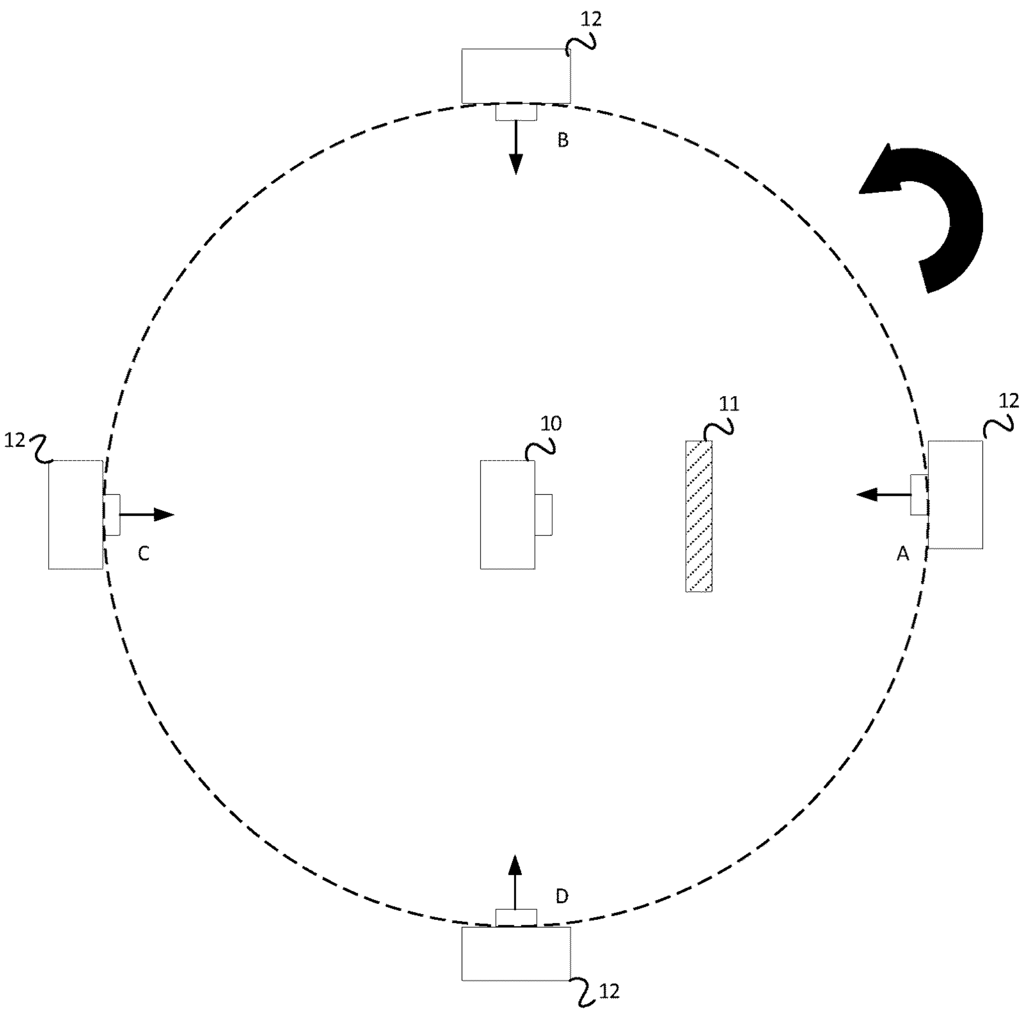


FIG. 4

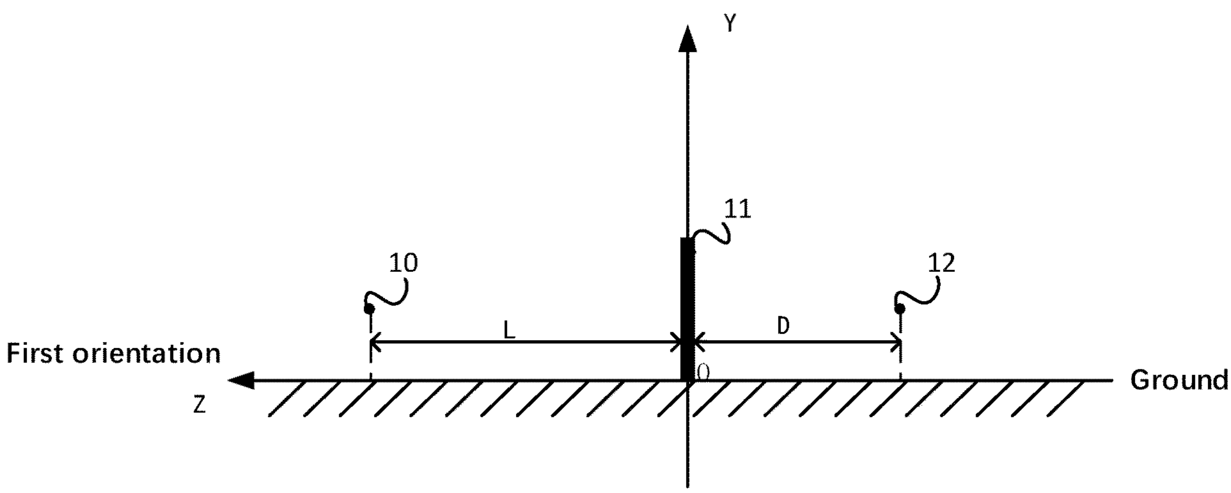


FIG. 5A

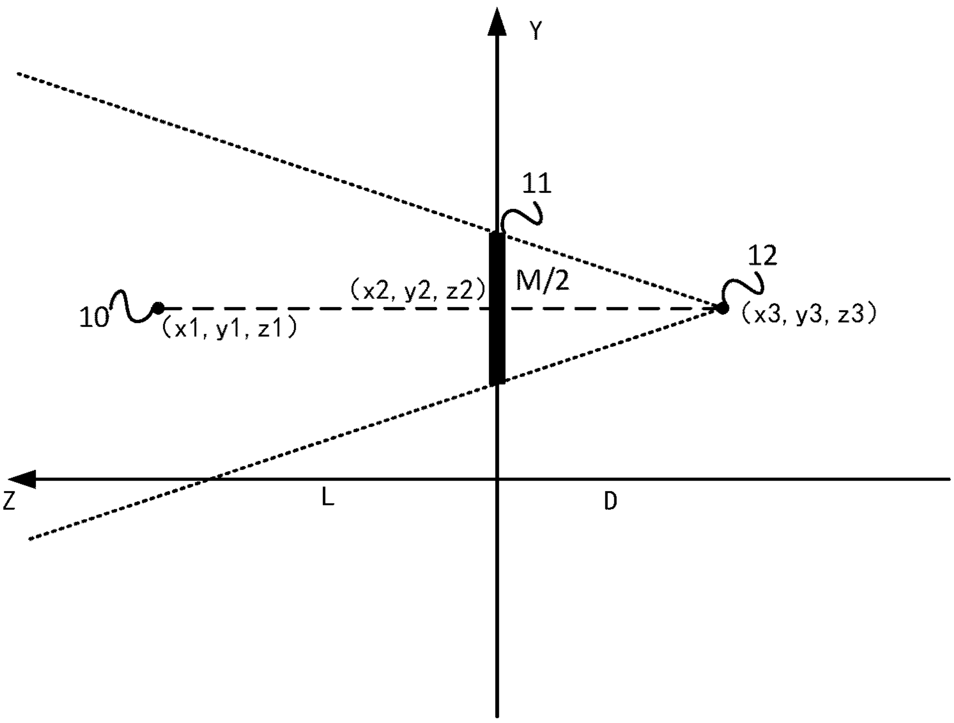
Y
11
12
M/2
(x2, y2, z2)
10
(x1, y1, z1)
(x3, y3, z3)
Z
L
D

FIG. 5B

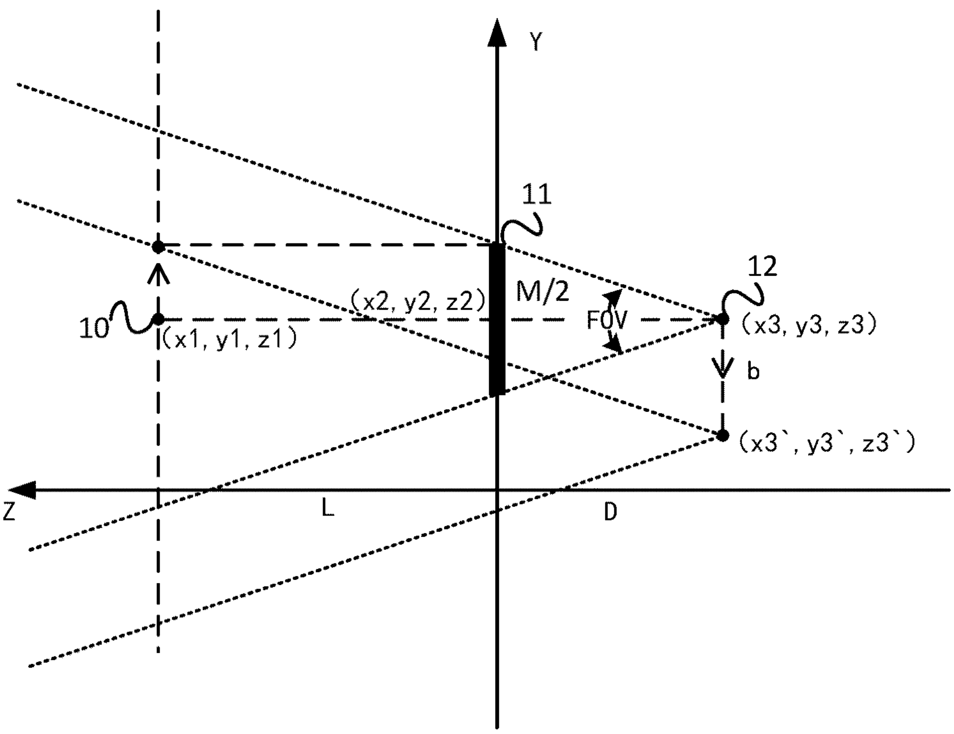
Y
11
12
M/2
(x2, y2, z2)
10
(x1, y1, z1)
FOV
(x3, y3, z3)
b
(x3`, y3`, z3`)
Z
L
D

FIG. 6

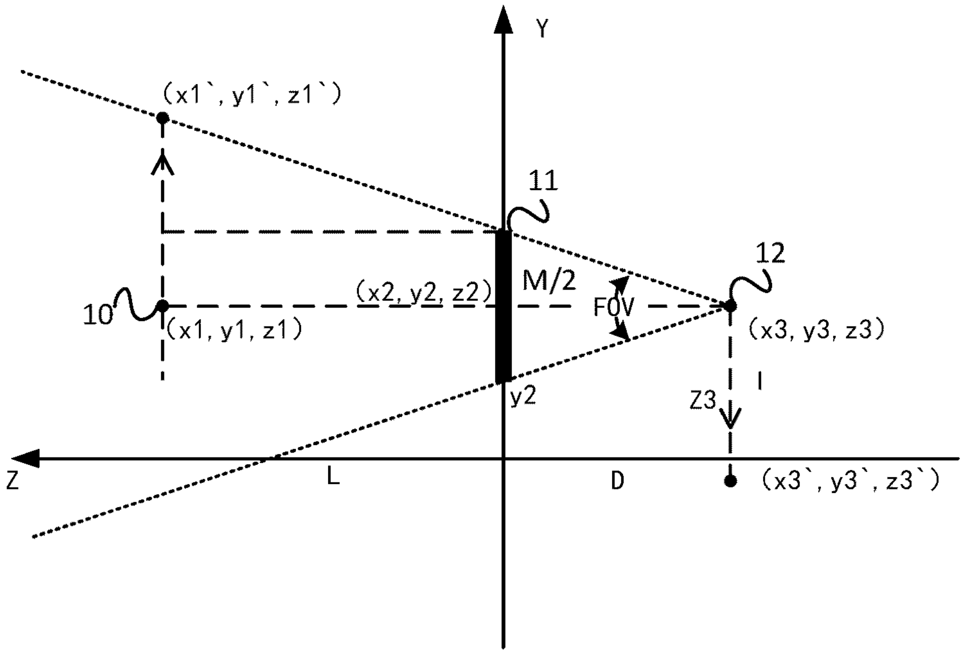
Y
(x1`, y1`, z1`)
11
12
M/2
(x2, y2, z2)
FOV
10
(x1, y1, z1)
(x3, y3, z3)
y2
Z3
l
Z
L
D
(x3`, y3`, z3`)

FIG. 7

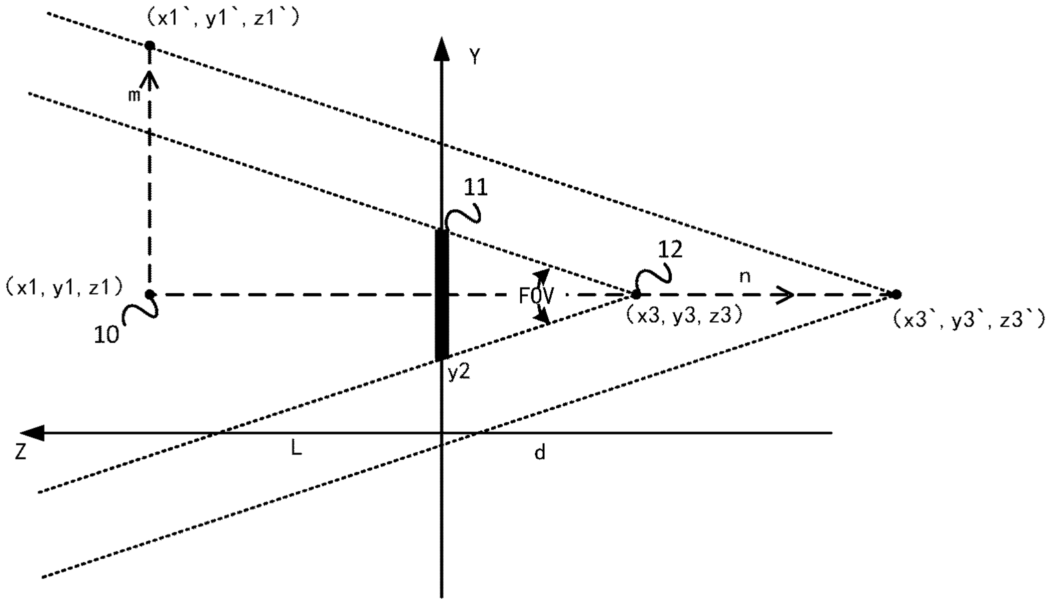
(x1`, y1`, z1`)
Y
m
11
12
(x1, y1, z1)
FOV
n
10
(x3, y3, z3)
(x3`, y3`, z3`)
y2
Z
L
d

FIG. 8

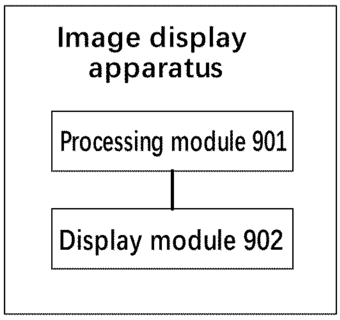


FIG. 9

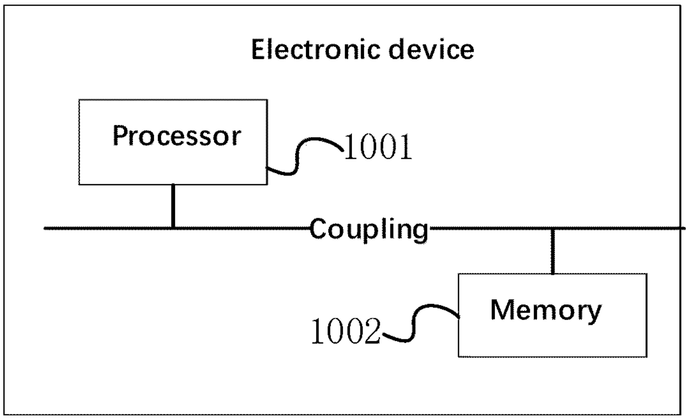


FIG. 10

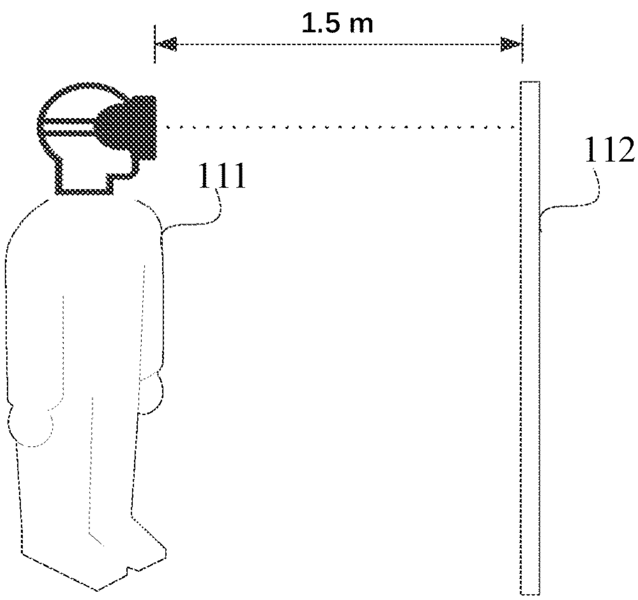


FIG. 11a

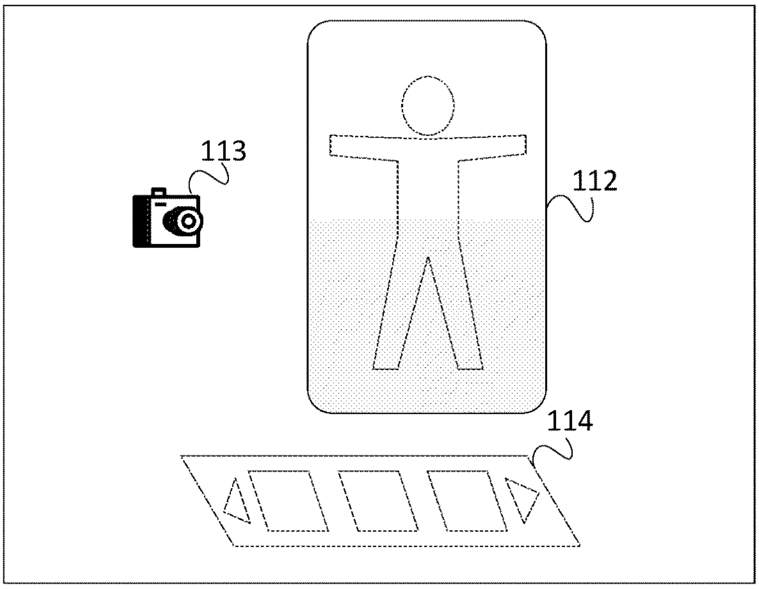


FIG. 11b

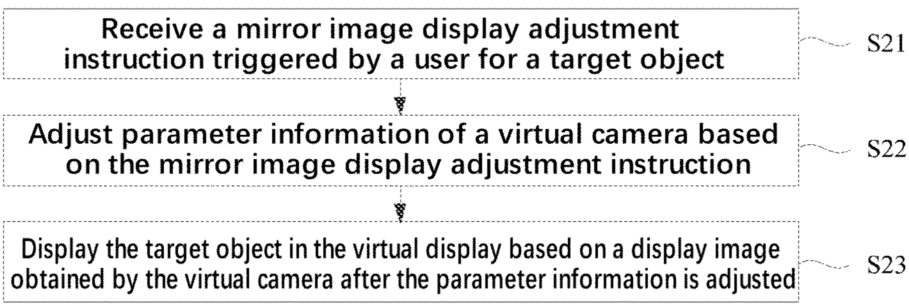


FIG. 12

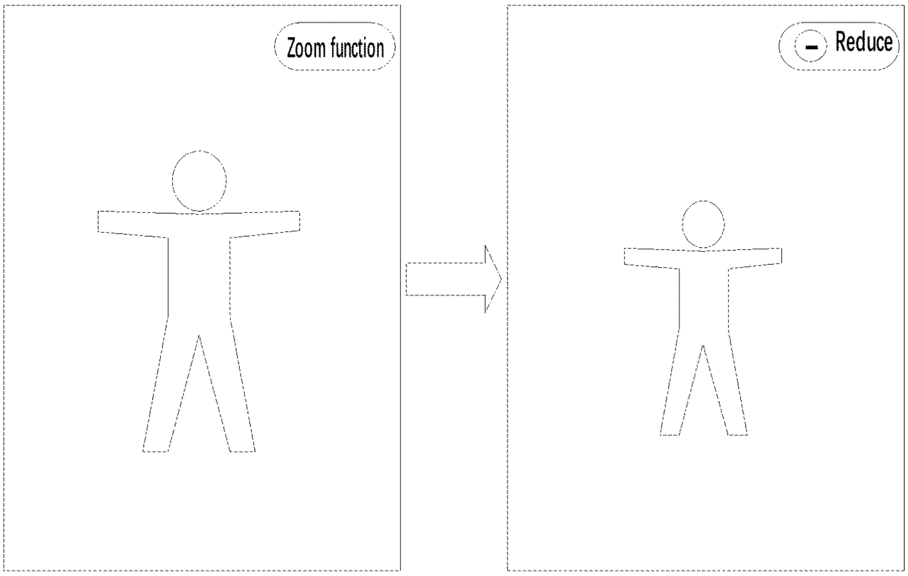


FIG. 13a

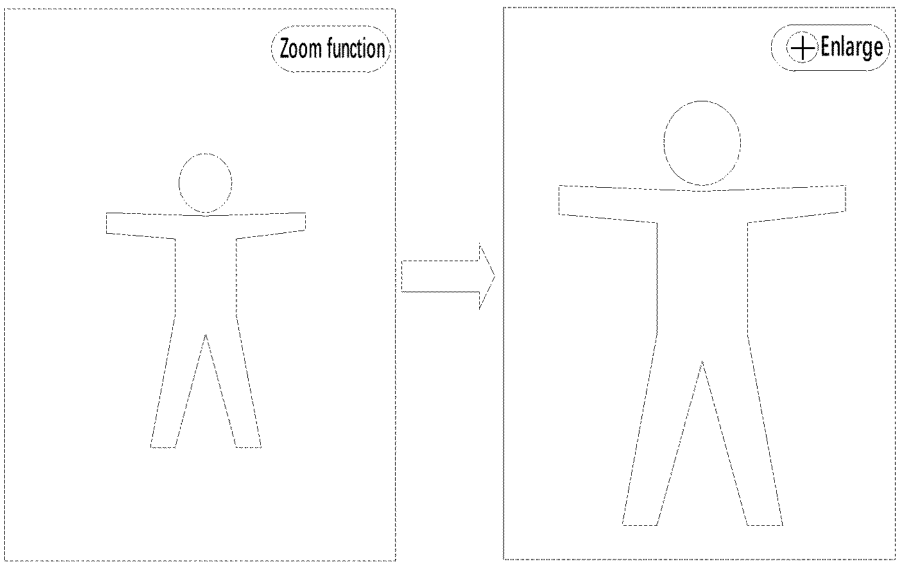


FIG. 13b

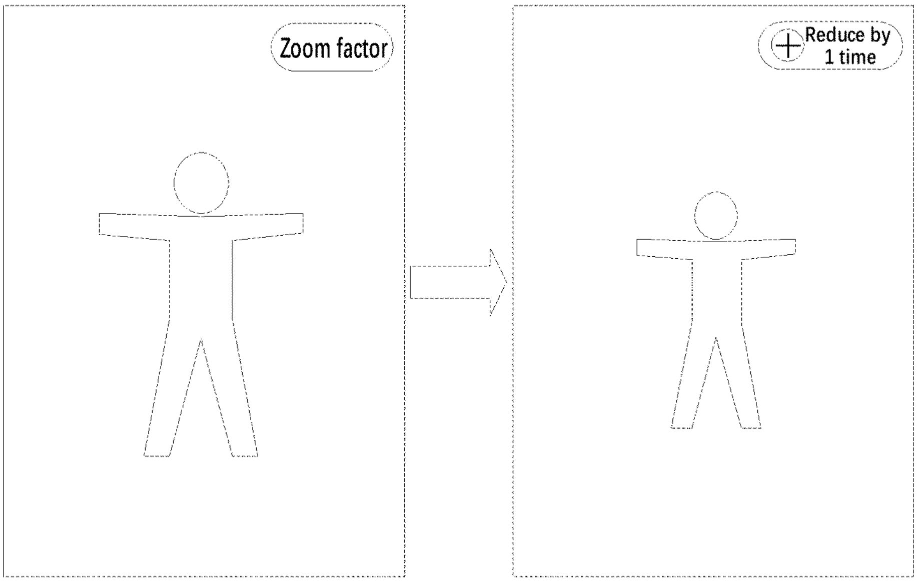


FIG. 13c

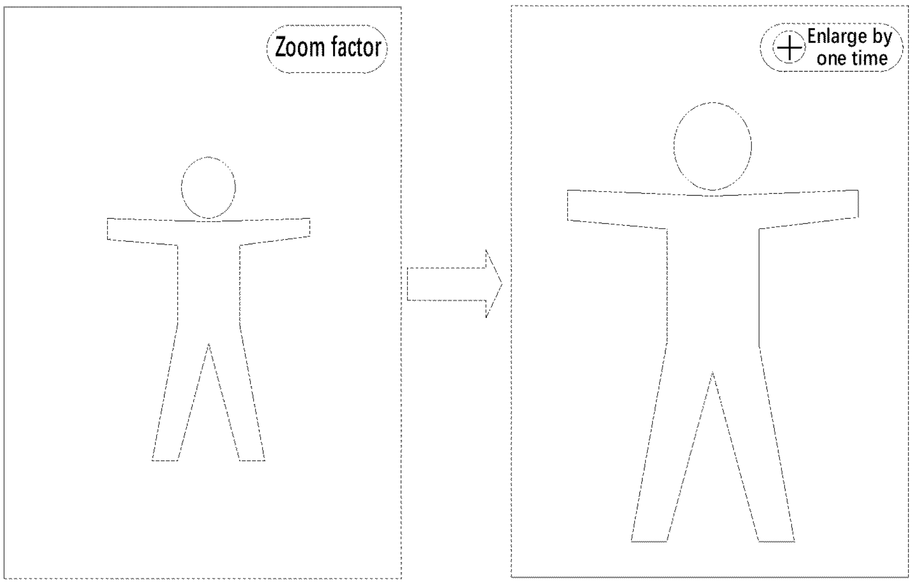


FIG. 13d

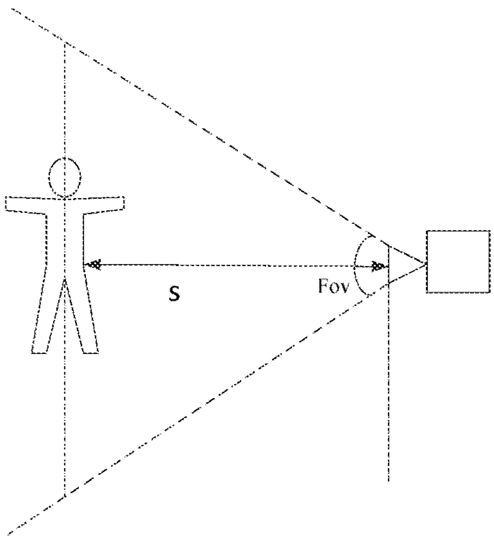


FIG. 14a

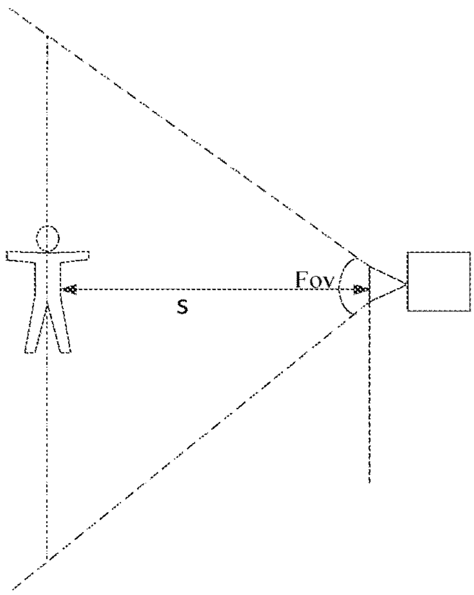


FIG. 14b

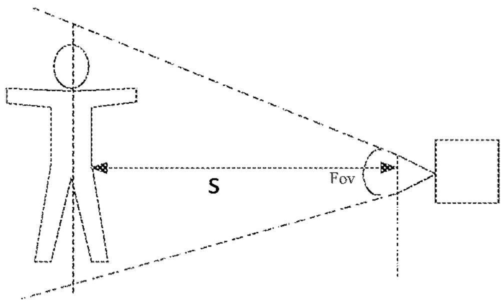


FIG. 14c

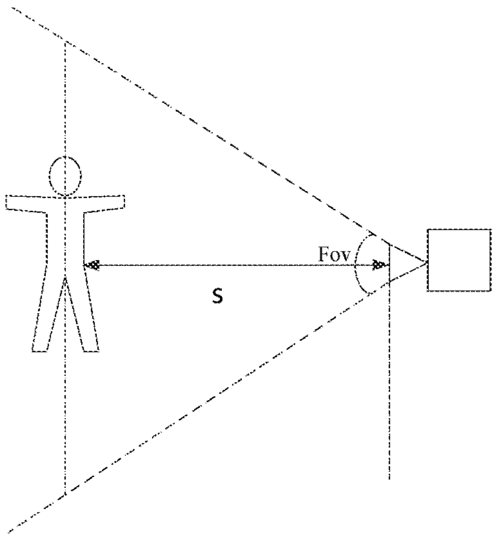


FIG. 14d

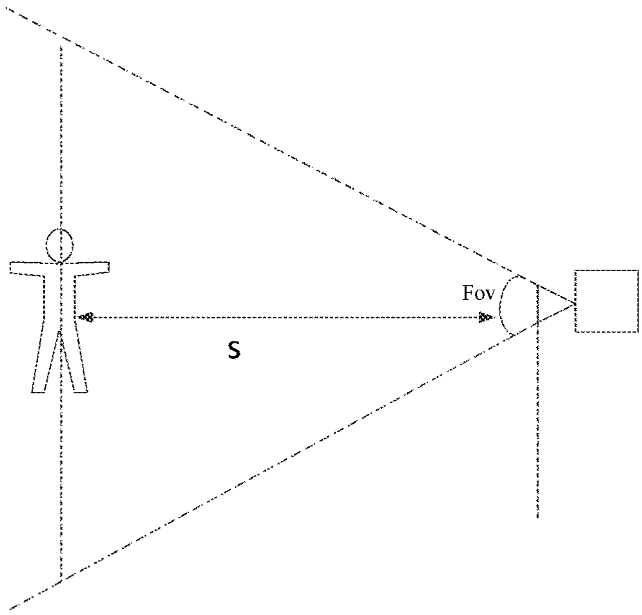


FIG. 14e

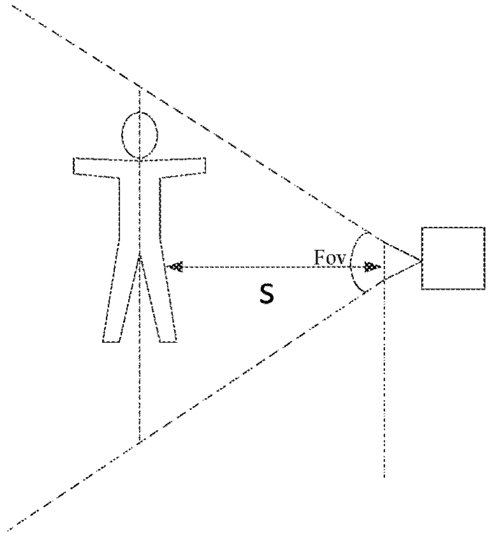


FIG. 14f

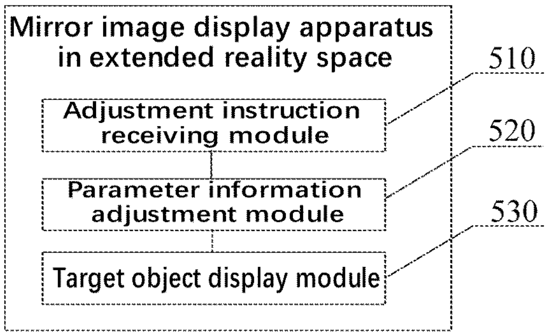


FIG. 15

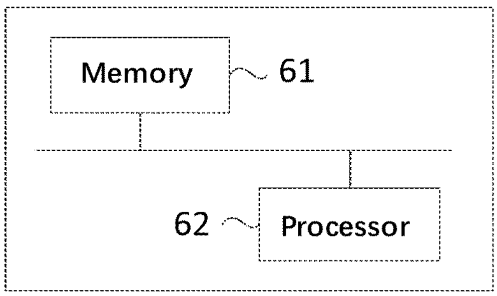


FIG. 16

**INTERNATIONAL SEARCH REPORT**

International application No. **PCT/CN2023/118297**

**A. CLASSIFICATION OF SUBJECT MATTER**

G06F3/01(2006.01)i；G06T19/00(2011.01)i

According to International Patent Classification (IPC) or to both national classification and IPC

**B. FIELDS SEARCHED**

Minimum documentation searched (classification system followed by classification symbols)

IPC:G06F3/-,G06T19/-

Documentation searched other than minimum documentation to the extent that such documents are included in the fields searched

Electronic data base consulted during the international search (name of data base and, where practicable, search terms used)

CNTXT, VEN, ENTXTC, CNKI: 扩展, 增强, 虚拟, 现实, 三维, 比例, 尺寸, 占比, 大小, 调节, 调整, 镜像, 镜子, 屏, 显示, 距离, 位置, 方向, 指令, AR, VR, 3D, AUGMENT+, VIRTUAL, REALITY, MIRROR, DISPLAY, IMAGE, SCENE, CAMERA, REFLECT+, LENS, LOCATION

**C. DOCUMENTS CONSIDERED TO BE RELEVANT**

| Category* | Citation of document, with indication, where appropriate, of the relevant passages | Relevant to claim No. |
|---|---|---|
| X | CN 115049803 A (BEIJING ZITIAO NETWORK TECHNOLOGY CO., LTD.) 13 September 2022 (2022-09-13) description, paragraphs [0034]-[0114], and figures 1-7 | 1, 3-9, 18-21 |
| X | CN 105210093 A (EYESMATCH LTD.) 30 December 2015 (2015-12-30) description, paragraphs [0042]-[0053] and [0154]-[0162], claims 1-19, and figures 1-16 | 10-21, |
| A | CN 113672189 A (HUAWEI TECHNOLOGIES CO., LTD.) 19 November 2021 (2021-11-19) entire document | 1-21 |
| A | CN 106775245 A (CHUANXIAN NETWORK TECHNOLOGY (SHANGHAI) CO., LTD.) 31 May 2017 (2017-05-31) entire document | 1-21 |
| A | US 2017365092 A1 (APPLE INC.) 21 December 2017 (2017-12-21) entire document | 1-21 |
| A | US 2021011607 A1 (CINEMOI NORTH AMERICA L.L.C.) 14 January 2021 (2021-01-14) entire document | 1-21 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **30 November 2023** | **13 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/118297**

| Patent document cited in search report | | | Publication date (day/month/year) | Patent family member(s) | | | Publication date (day/month/year) |
|---|---|---|---|---|---|---|---|
| CN | 115049803 | A | 13 September 2022 | None | | | |
| CN | 105210093 | A | 30 December 2015 | EP | 3404619 | A1 | 21 November 2018 |
| | | | | RU | 2656817 | C2 | 06 June 2018 |
| | | | | WO | 2014100250 | A2 | 26 June 2014 |
| | | | | AU | 2019246856 | A1 | 31 October 2019 |
| | | | | AU | 2019246856 | B2 | 11 November 2021 |
| | | | | JP | 2016509683 | A | 31 March 2016 |
| | | | | JP | 6441231 | B2 | 19 December 2018 |
| | | | | EP | 4184443 | A1 | 24 May 2023 |
| | | | | AU | 2013361507 | A1 | 09 July 2015 |
| | | | | AU | 2013361507 | A2 | 16 July 2015 |
| | | | | EP | 2936439 | A2 | 28 October 2015 |
| | | | | KR | 20150102054 | A | 04 September 2015 |
| | | | | KR | 102265996 | B1 | 16 June 2021 |
| | | | | CN | 105210093 | B | 08 June 2021 |
| | | | | CN | 109288333 | B | 30 November 2021 |
| | | | | CN | 109288333 | A | 01 February 2019 |
| CN | 113672189 | A | 19 November 2021 | WO | 2021227859 | A1 | 18 November 2021 |
| | | | | EP | 4137930 | A1 | 22 February 2023 |
| | | | | IN | 202227063443 | A | 16 December 2022 |
| | | | | VN | 93091 | A | 27 February 2023 |
| | | | | US | 2023214968 | A1 | 06 July 2023 |
| CN | 106775245 | A | 31 May 2017 | CN | 106775245 | B | 14 February 2020 |
| US | 2017365092 | A1 | 21 December 2017 | US | 10319141 | B2 | 11 June 2019 |
| US | 2021011607 | A1 | 14 January 2021 | WO | 2021011305 | A1 | 21 January 2021 |
| | | | | US | 2021271372 | A1 | 02 September 2021 |
| | | | | US | 11709576 | B2 | 25 July 2023 |
| | | | | US | 11023095 | B2 | 01 June 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202211129263
- CN 202211146361